Europäisches Patentamt

(19) European Patent Office

Office européen des brevets

(11) Publication number: **0 002 567**
**B1**

(12) **EUROPEAN PATENT SPECIFICATION**

(45) Date of publication of patent specification: **02.06.82**

(51) Int. Cl.³: **G 03 G 15/00**

(21) Application number: **78300620.8**

(22) Date of filing: **13.11.78**

(54) Document reproduction system.

(30) Priority: **19.12.77 US 861761**

(43) Date of publication of application:
**27.06.79 Bulletin 79/13**

(45) Publication of the grant of the patent:
**02.06.82 Bulletin 82/22**

(84) Designated Contracting States:
**DE FR GB**

(56) References cited:
**FR - A - 2 223 760**
**US - A - 3 936 182**
**US - A - 4 062 061**

(73) Proprietor: **International Business Machines Corporation**
**Armonk, N.Y. 10504 (US)**

(72) Inventor: **Howard, Guy Junius**
**4793 Essex Circle**
**Boulder, Colorado 80301 (US)**
Inventor: **Hubbard, James Henry**
**Sugarloaf Road**
**Boulder, Colorado 80302 (US)**
Inventor: **McCrumb, Walter Carleton**
**2717 W. County Rd. 6, Rt. 2**
**Berthoud, Colorado 80513 (US)**
Inventor: **Spivey, Paul Richard**
**7481 Mt. Meeker**
**Longmont, Colorado 80501 (US)**

(74) Representative: **Hawkins, Anthony George Frederick**
**IBM United Kingdom Patent Operations Hursley Park**
**Winchester Hants. SO21 2JN (GB)**

Courier Press, Leamington Spa, England.

Document reproduction system

The present invention relates to document reproduction systems.

A major factor in cost of such systems is the maintenance cost. Any procedures and facilities which tend to reduce maintenance time have a salutory effect on cost reduction of machine operation. Many machines having heavy operator involvement in the operation have a multitude of interacting parts and control circuits. Error conditions can be detected by diverse symptoms wherein one symptom can indicate any one of a large plurality of error conditions. In diagnosing such machines for error conditions, including improving adjustment of the various parts of the machine, the operating history of the machine can be used to advantage. However, the history of the machine, including the error conditions, must be so organized and readily available to facilitate reduced maintenance time.

Programmed digital control systems may replace relay control circuits for controlling document reproduction machines. Such control systems enable many more functions to be performed, but may thereby complicate the diagnosis and analysis of machine failures. It is desirable, therefore to organise them to effect efficient error diagnosis.

U.S. Patent Specification No. 4,062,061 shows a document reproduction machine including a control system which has a data store coupled thereto. The control system is responsive to detected malfunctions of the machine to set fault flags corresponding to these malfunctions. These fault flags are routinely scanned to declare a machine fault when a set flag is discovered. The number of occurrences of certain faults are also stored in the memory for subsequent diagnosis, though no details of such diagnosis are set out.

The present reproduction system uses a control arrangement which employs a record of malfunctions stored in the digital store coupled to the control system. However, in this system no such fault flags are employed as they are in the above U.S. Patent Specification. Instead, only records of the occurrences of faults are kept. The control system is responsive to manually actuable buttons which are operable in sequence to effect scanning through the fault records to present fault information in sequences which permit efficient diagnosis.

Accordingly, the present invention provides a document reproduction system including a digital control system having coupled thereto a multi-digit display system, an input keyboard, a plurality of manually actuable switches for initiating respective operational functions of the reproducing system, a non-volatile digital store and first means coupled to malfunction detectors and operable to record in the store error entries, each representing the number of occurrences of an associated malfunction detected in the reproduction system, characterised by the entries being arranged in groups of related malfunctions, and second by means responsive to the actuation of a first of said switches and a predetermined keyboard entry to perform an error log scanning operation in which actuation of a second of said switches causes scanning of said entries in sequence to search for the first having a non-zero content, detection of such a content causes a number identifying the group in which the entry occurs to be displayed on the display system, subsequent activation of a third of said switches causes a number identifying the entry to be displayed, then actuation of a fourth of said switches causes the content of the entry to be displayed and actuation of the second switch continues the scanning.

The invention will now be described by way of example with reference to the accompanying drawings, in which:

Figure 1 is a diagram showing a document reproduction machine including a control system;

Figure 2 is a block diagram of some of the maintenance circuits in the Figure 1 machine;

Figure 3 is a circuit diagram of an error logging circuit in the machine operating circuits of the Figure 1 machine;

Figure 4 is a circuit illustrating controlled access to the nonvolatile store in Figure 1;

Figure 5 is a diagram illustrating data flow with respect to the nonvolatile store in a manner which illustrates stored signal organization of the nonvolatile store for enhancing maintenance and diagnostic procedures;

Figure 6 is a flow chart illustrating interaction between the control panel and the nonvolatile store in Figure 1;

Figure 7 is a flow chart illustrating interaction of said control panel and nonvolatile store for retrieving operations data;

Figure 8 is a flow chart illustrating interaction of said control panel and nonvolatile store for adjusting machine operation parameters;

Figure 9 is a flow chart illustrating interaction of said control panel and nonvolatile store for controlling limits of operation on particular components within the Figure 1 machine;

Figure 10 is a flow chart illustrating interaction between said control panel and nonvolatile store illustrating diagnostic control of a portion of the Figure 1 machine;

Figure 11 is a block diagram of a further embodiment of the present invention;

Figure 12 is a flow chart showing various program segments usable in the Figure 11 embodiment;

Figure 13 is a flow chart illustrating a diagnostic monitoring routine at an instruction level;

Figure 14 is an instruction level flow chart showing action of the programmed processor in Figure 11 when analyzing a control panel input from a start button;

Figure 15 is a simplified flow chart illustrating a mode selection during the maintenance operation of the machine of Figure 11;

Figure 16 shows the response of a computerized version of the invention to a keyboard entry for selecting a mode of operation during maintenance of the Figure 11 machine;

Figure 17 illustrates a flow chart of the computer program instruction type showing enabling casual or operator access to predetermined portions of the nonvolatile store;

Figure 18 is an instruction level flow chart relating to accessing the nonvolatile store for retrieving error and operations data;

Figure 19 is a computer instruction level flow chart illustrating certain internal functions for enabling access to the nonvolatile store;

Figure 20 is a computer instruction flow chart showing control programming related to the error logs and operation logs of the nonvolatile store;

Figure 21 is a computer instruction level flow chart showing the reaction of the program processor in the maintenance mode to the actuation of a misfeed reset button;

Figure 22 is a computer instruction level flow chart showing operations of the illustrated machine in a diagnostic mode with respect to table flags associated with the nonvolatile store;

Figure 23 is a computer instruction level flow chart illustrating the fetching of logged data from the nonvolatile store;

Figure 24 is a computer instruction level flow chart illustrating searching tables stored in a nonvolatile store;

Figure 25 is a computer flow chart illustrating control of the nonvolatile store with regard to field lengths of the logs and other entries in such nonvolatile store; and

Figure 26 is a computer instruction level flow chart illustrating recording data signals into the nonvolatile store during the maintenance mode.

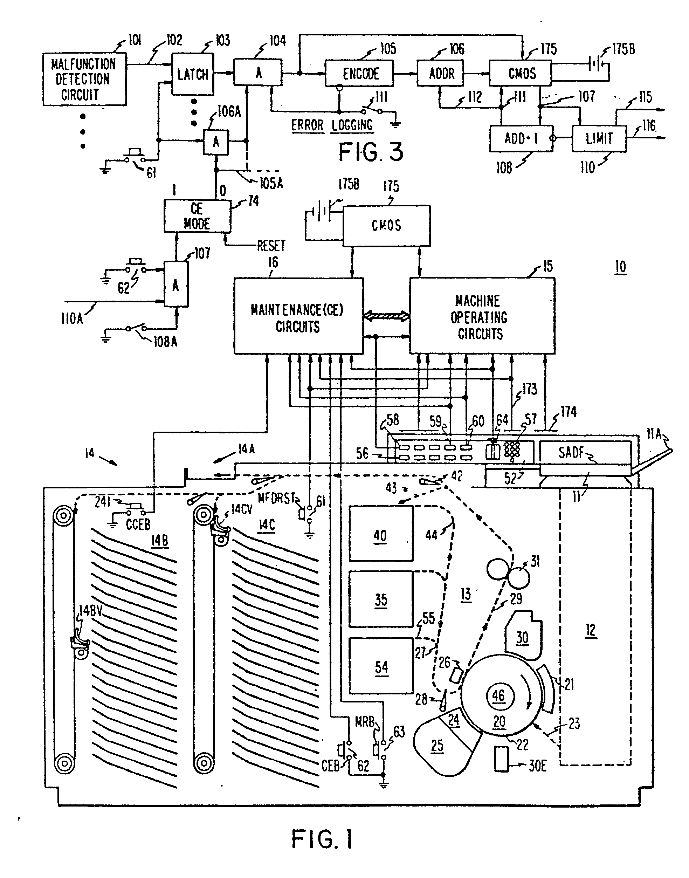

Referring firstly to Figure 1, a document reproduction machine 10 includes a semiautomatic document feed (SADF) 11 which takes documents manually inserted into tray 11A and places same into an imaging position with respect to original document input optics 12. The image is projected into copy production portion 13, later described, which then supplies produced copies to output portion 14. Output portion 14 includes an output exit tray 14A plus collator portions 14B, 14C. Machine 10 is controlled during normal operations by machine operating circuits 15 and during maintenance procedures by maintenance circuits 16. Circuits 15 operate the machine synchronously using well known techniques. Accordingly, detailed description of circuits 15 is dispensed with. Maintenance circuits 16 will be described in some detail. A nonvolatile store 175 consists of a battery 175B operated CMOS semiconductive memory. Both circuits 15 and 16 access CMOS 175 as will become apparent. Machine 10 is of the semiautomatic type, that is, there is close operator control of copy production. In general, machine 10 is a run-oriented machine in that an operator will select a number of copies to be produced whether simplex, duplex and so forth, and then actuate the machine via a start button.

The copy production machine 10 includes an operator's control panel 52 having a plurality of manually actuable switches for introducing copy production parameters to copy production portion 13.

Before proceeding with a description of the control and maintenance systems, the operation of copy production portion (CPP) 13 will be described. CPP 13 is a xerographic copy production machine. Photoconductor drum member 20 rotates in the direction of the arrow past a plurality of zerographic processing stations. A first station 21 imposes either a positive or negative electrostatic charge on the surface of photoconductor member 20. It is preferred that this charge be a uniform electrostatic charge over a uniform photoconductor surface. Such charging is done in the absence of light such that projected optical images, indicated by dash line arrow 23, alter the electrostatic charge on the photoconductor member in preparation for image developing and transferring. The projected optical image from original input optics 12 exposes the photoconductor surface in area 22. Light in the projected image electrically discharges the surface areas of photoconductor member 20 in accordance with lightness. With minimal light reflected from the dark or printed areas of an original document, for example, there is no corresponding electrical discharge. As a result, an electrostatic charge remains in those areas of the photoconductive surface of member 20 corresponding to the dark or printed areas of an original document in SADF 11. This charge pattern is termed a "latent" image on the photoconductor surface. Interimage erase lamp 30E discharges photoconductor member 20 outside defined image areas.

The next xerographic station is developer 24 which receives toner from toner supply 25 for deposition on the photoconductive surface. The developer station receives the toner with an electrostatic charge of polarity opposite to that of the charged areas of the photoconductive surface. Accordingly, the toner particles adhere electrostatically to the charged areas, but do not adhere to the discharged areas. Hence, the photoconductive surface, after leaving station 24, has a toned image corresponding to the dark and light areas of an original document in SADF 11.

Next, the latent image is transferred to a copy sheet in transfer station 26. The copy sheet is brought to the station 26 from an input paper path portion 27 via synchronizing input gate 28. In station 26 the copy paper is brought into contact with the toned image on the photoconductive surface resulting in a transfer of the toner to the copy paper. After such transfer, the copy sheet is stripped from the photoconductive surface for transport along path 29. Next, the copy sheet has the electrostatically carried image fused thereon in fusing station 31 for creating a permanent image on the copy sheet. During such processing, the copy sheet receives electrostatic charges which can have an adverse affect on copy sheet handling. Accordingly, the copy sheet after fusing can be electrically discharged before transfer to output portion 14.

Returning now to the photoconductor member 20, after the image area on member 20 leaves transfer station 26, there is a certain amount of residual toner on the photoconductive surface. Accordingly, cleaner station 30 has a rotating cleaning brush (not shown) to remove the residual toner for cleaning the image area in preparation for receiving the next image projected by original input optics 12. The cycle then repeats by charging the just-cleaned image area by charging station 21.

The production of simplex copies or the first side of duplex copies by CPP 13 includes transferring a blank copy sheet from blank sheet supply 35, thence to transfer station 26, fuser 31, and when in the simplex mode, directly to the output copy portion 14.

When in the duplex mode, duplex diversion gate 42 is actuated by machine operating circuits 15 to the down position for deflecting single-image copies to travel to the interim storage unit 40. Here, the partially produced duplex copies (image on one side only) reside waiting for the next subsequent single-image copy producing run in which the copy sheets receive the second image.

In the next successive single-image run, initiated by inserting a document into SADF 11, the copy sheets are removed one at a time from the interim storage unit 40, transported over path 44, thence to input path 27 for receiving a second image. The two-image duplex copy sheets are then transferred into output portion 14.

CPP 13 also has second copy paper supply 54 which supplies copy paper to input path 27 via copy sheet path 55. Selection of paper supply 35 or 54 as a copy paper source is controlled from panel 52 by actuation of switch 56. Selection is mutually exclusive. Machine operating circuits 15 respond to switch 56 to actuate a copy sheet picker (not shown) in the respective copy sheet supplies 35, 54 in a usual manner.

Control panel 52 includes keyboard 57, enabling the operator to insert a series of numbers into machine operating circuits 15 via an input register 173. In general, keyboard 57 selects the number of copies to be produced of each image transferred through original input optics 12 and an auxiliary control for accommodating light originals is a darker copy button 58. Once the operator parameters have been appropriately selected through panel 52, start button 59 is depressed resulting in actuating machine operating circuits 15 to operate machine 10 in accordance with the panel 52 selections. In the event the operator desires to stop the machine, stop button 60 is depressed. In addition, other parameter selection buttons such as duplex and the like are on panel 52. Since they are not pertinent to an understanding of the present invention they are not described.

In addition to the control panel 52 switches, some control switches useful for diagnostic purposes are located inside the machine. That is, a panel covering the machine has to be removed for accessing these buttons. A first button which is normally an operator controlled button is misfeed reset button 61. In the event of a copy sheet jam along the paper path, misfeed reset button 61 is actuated for telling the machine operating circuits 15 that the operator has concluded it is safe to proceed with the next copy production job. Additionally, two buttons actuate circuits for facilitating maintenance and diagnostics of the machine. The first is a so-called customer engineer button (CEB) 62 which places the machine 10 into a so-called CE mode wherein maintenance circuits 16 have the ultimate control over machine 10. During the CE mode the machine normally does not produce copies. In the event copies are desired to be produced for assistance in diagnostics, then the momentary run button (MRB) 63 is actuated by maintenance personnel.

The just described manually actuated buttons including keyboard 57 and digital display 64, provide interactions between the operating personnel, maintenance circuits 16, operating circuits 15 and the remainder of machine 10, in particular CMOS 175, for facilitating diagnostics and maintenance of machine 10. In the CE mode the entries into keyboard 57 alter the interpretation of the various operator actuated buttons on panel 52 as well as selecting subdivisions of the maintenance procedures as will become apparent.

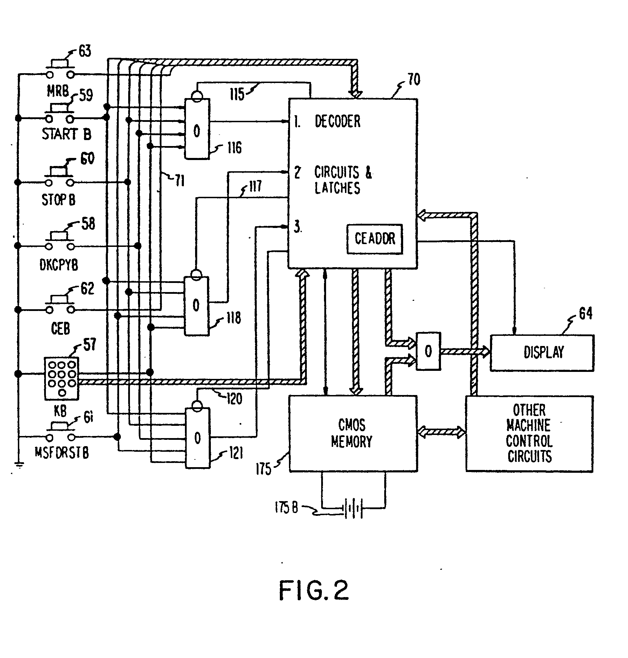

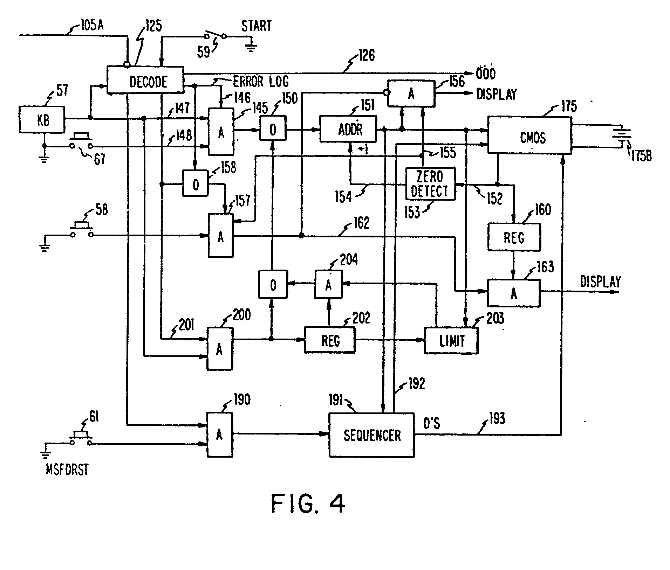

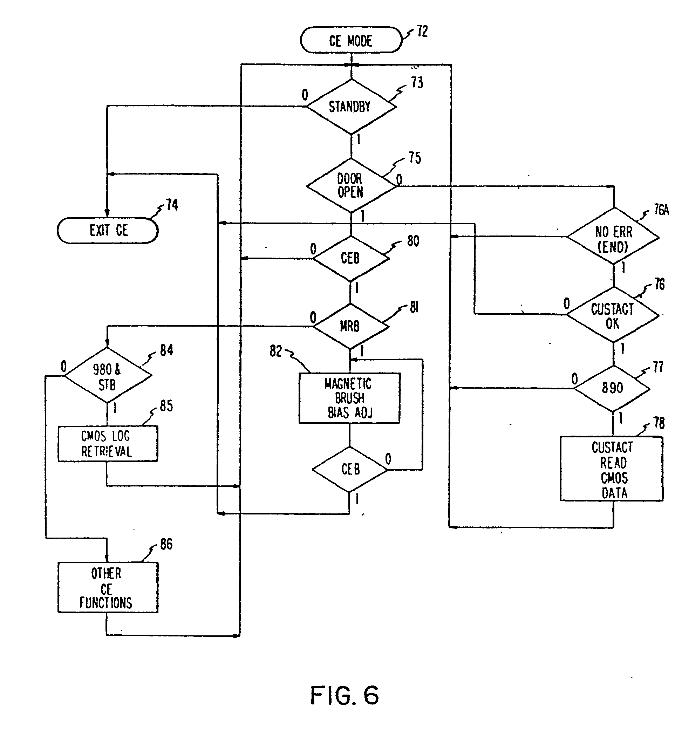

Figure 2 shows a portion of maintenance circuits 16. The operator inputs are shown along the left including keyboard 57 to MRB 63. CEB 62 is connected to a set of decoder circuits and latches 70 via a line 71 for actuating same to the CE mode. Once the CE mode is established the sequence of operation of decoder 70 is shown in Figure 6. That is, the Figure 6 flow chart represents the electronic circuits of decoder 70 that operate in a monitoring or supervisory mode. The flow chart also represents the steps maintenance personnel must perform in order to effect predetermined specific maintenance procedures, as will become apparent. The CE mode is memorized by a latch 74 (Figure 3) at step 72 (Figure 6). For the CE mode to be active, machine 10 must not be producing copies as indicated by the standby decision element 73. If machine 10 is active, then the CE mode is reset (exit) at 74. Assume that the standby mode is active, then the decoder 70 determines whether or not any of the aforementioned maintenance access doors (not shown) are open. If such doors are not open, even though a paper supply access door is open, then, after determining an error-free condition at 76A, the circuits 70 check at 76 to see whether or not user access (CUSTACT) to nonvolatile store 175 is authorized. This authorization indication can be a bit position within nonvolatile store 175 or a switch setting (not shown) within decoder 70. In the event the user is not authorized access, the CE mode is reset at 74. An error-free condition is indicated by an "ENP" bit position (not shown) in machine operating circuits 15. Upon detecting authorization, decoder then examines the input from keyboard 57. If the operator had inserted a number 980 into keyboard 57, then a customer reading mode for CMOS 175 is set up at 78. On the other hand, if at step 77, 980 was not sensed from keyboard 57, decoder 70 returns to step 73.

With the doors open at step 75, decoder 70 must determine whether or not the CE mode is to be entered. CEB 62 is sensed at 80. If it is not depressed, step 73 is repeated. In this regard, the CE mode is exited whenever the operator pushes CEB 62 a second time; i.e., CE mode latch 72 is of the toggling type as seen in Figure 3. It is to be understood that other controls (not shown) maintain machine 10 in a condition for being maintained and analyzed as hereinafter described; i.e., machine 10 will not be started until after controls (not shown) not pertinent to this invention are invoked.

Assume CEB 62 is actuated at step 80, then decoder 70 senses at 81 for MRB 63. If MRB 63 is actuated, then a maintenance adjustment mode is entered at 82 for adjusting the magnetic brush bias of developer station 24. As long as CEB 62 is not again actuated adjustment procedures are permitted. Upon actuating CEB 62 during adjustment 82, the CE mode is exited at 74.

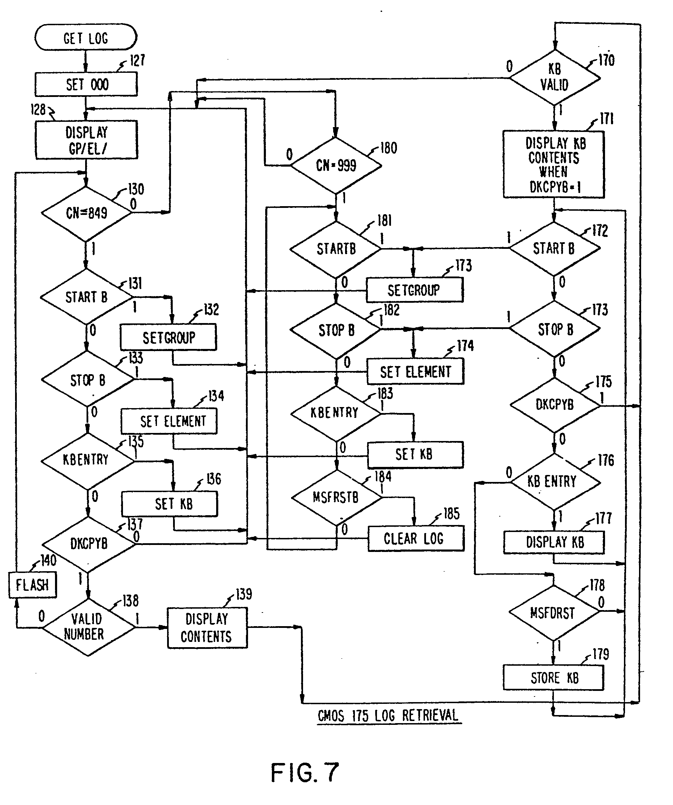

If, on the other hand, MRB 63 was not actuated at 81, then decoder 70 senses the keyboard 57 input for 980 code. If the 980 code has been entered and start button 59 has been actuated at 84, then the maintenance log retrieval mode is entered at 85. This mode will be described later with respect to Figure 7. If, on the other hand, the AND circuit conditions at 84 were not satisfied, other CE functions not pertinent to the present invention are enabled at 86. From such functions step 73 is again performed. Also, a second atuation of CEB 62 deactivates the CE mode at any time.

The above-described flow chart represents a scanning operation wherein a clock (not shown) scans a plurality of latches or flip-flops (not shown) respectively enabling AND circuits (not shown) for peforming the functions set forth in Figure 6. For ease of understanding the flow chart approach was chosen over the detailed hardware approach. A more complex computer control approach of this flow chart is detailed later. In this regard, CMOS log retrieval steps 85, other CE functions 86, and read CMOS data 78 each are substantial operations which will be later described in detail.

Before proceeding further with a description of log retrieval, the associated interaction between panel 52 and the Figure 2 illustrated circuits, the structure and generation of the logs to be retrieved are described. Nonvolatile store 175 contains three types of recorded indicia. A first type is a set of logs (data entries) relating to operations data as supplied by machine operating circuits 15. A second type is error data also supplied by machine operating circuits 15. The error data has two types of data, one type is operations error data and the second is a machine error failure data. Each of these two broad classes are further subdivided in accordance with the various operational portions of the machine 10, such as SADF 11, original input optics 12, CPP 13, and output portion 14. Finally, nonvolatile store 175 contains authorization indicia enabling machine operating circuits 15 to operate machine 10 in certain modes only if authorization bits have been inserted into nonvolatile store 175. Some of these authorization bits are designed to alter the operation of the machine 10 in accordance with the location of the machine in the world; i.e., different nations have different requirements such as copy sheet size variations. Machine operating circuits 15 must know how to operate machine 10 in these various diverse locations. Further, extra cost features such as collators 14B, 14C can be added. Therefore, nonvolatile store 175 contains bit positions for indicating which features are in machine 10. In this way machine operating circuits 15 more precisely control machine 10 with respect to such added features.

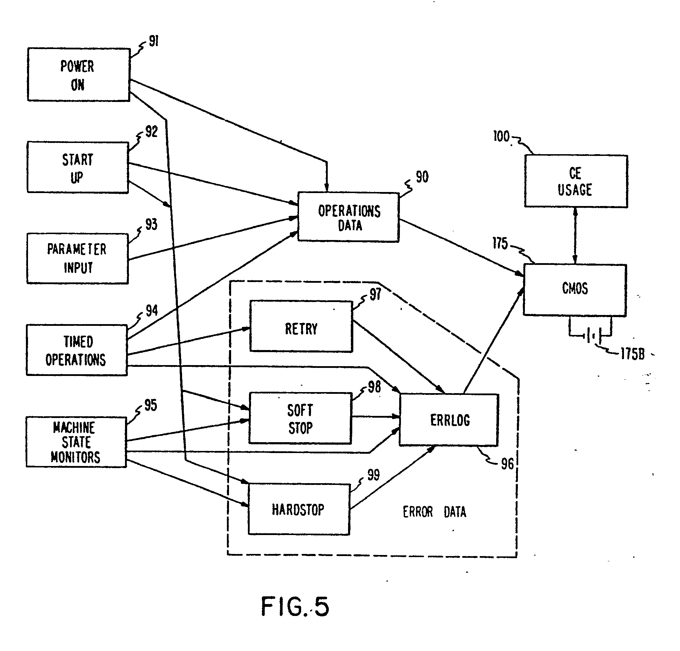

The operations data is garnered from control panel 52, SADF 11, collators 14B, 14C, and CPP 13. As seen in Figure 5 the logged data flow for operations data at 90 comes from machine 10 having power on 91, start up for each run at 92, panel 52 operator parameter inputs 93, and from CPP 13 timed operations at 94. All of these inputs are supplied to nonvolatile store 175 as operations data 90 by machine operating circuits 15. Table I below indicates the data field in operations data 90 together with the keyboard (KB) code to be inserted in keyboard 57 for fetching the indicated data field during mode 85 of Figure 6.

## Table I—Operations data

| KB Code | Data Field |
|---|---|
| 850 | Number of Originals Fed Through SADF 11 |
| 852 | Number of Originals Placed on Document Glass |
| 854 | Number of Originals Duplexed |
| 856 | Number of Originals Reduced |
| 858 | Number of Originals Collated |
| 860 | Number of Originals Using Supply 54 |
| 862 | Number of Separation Mode Runs |
| 864 | Total Number of Collated Copies |
| 866 | Total Number of Reduced Copies |
| 868 | Total Number of Copies in Run Lengths 1—5 |
| 870 | Total Number of Copies in Run Lengths 6—10 |
| 872 | Total Number of Copies in Run Lengths 11—20 |
| 874 | Total Number of Copies in Run Lengths 21—40 |
| 876 | Total Number of Copies in Run Lengths 41+ |

SADF 11 has a pivoted lid (not shown) for enabling the operator to semiautomatically feed documents through SADF 11 or to manually place originals directly on a document glass (not shown) over which SADF 11 transports documents to be copied. In addition, the number of originals reproduced during a duplex mode and/or reduced with copies collated is also indicated. Copy sheet supply 54 is termed an alternate copy sheet supply, therefore it is of interest to see how much the alternate supply is used. Further, the machine 10 can automatically insert separator sheets between successive jobs, therefore the number of separation mode runs are tallied. Finally, the total number of copies made in collation, reduced and in various run lengths are tallied. In addition to all of the data fields mentioned above, a separate billing meter (not shown) is used in the machine for tallying the total number of copies produced. With regard to fields 868—876 each tally represents the total number of copies produced in the respective run lengths.

The error data is received from diverse sources including machine state monitors 95. Such monitors are, for example, fuser temperature and the like. The error data is assembled into an error log at 96 and then recorded in the nonvolatile store 175. The character of the error log will include machine retries from 97, soft stops at 98, and hard stops at 99. A machine retry occurs when an intermittent error condition is accommodated by trying an operation twice, rather than once, before stopping copy production machine 10 for the error condition. A hard stop is an error condition in the xerographic process CPP 13 which requires the machine 10 to stop immediately. A soft stop allows certain functions to continue as is well known in the arts. The error data from the diverse sources is divided into two categories, operational error logs and machine state error logs. Table II below shows the operational error log in one embodiment of the invention.

## Table II—Operational error log

| Scan Group | Copy Sheet Path Error |
|---|---|
| 110 | Aligner 28 Slow Misfeed |
| | 111 Primary Selected |
| | 112 Alternate Selected |
| | 113 Duplex Selected |
| 120 | Aligner 28 Late Misfeed |
| | 121 Primary Selected |
| | 122 Alternate Selected |
| | 123 Duplex Selected |
| 130 | Aligner Misfeed (Retry Successful) |
| | 131 Primary Selected |
| | 132 Alternate Selected |
| | 133 Duplex Selected |
| 140 | Aligner Misfeed (Retry Unsuccessful) |
| | 141 Primary Selected |
| | 142 Alternate Selected |
| | 143 Duplex Selected |
| 150 | Detach Misfeed |
| | 151 Primary Selected |
| | 152 Alternate Selected |
| | 153 Duplex Selected |
| | 154 Vacuum Plenum Failure |
| 160 | Paper on Drum |
| | 161 Primary Selected |
| | 162 Alternate Selected |
| | 163 Duplex Selected |
| 170 | Fuser Misfeed |
| | 171 Primary Selected |
| | 172 Alternate Selected |
| | 173 Duplex Selected |
| 180 | Exit Misfeed |
| | 181 Simplex Arrival Failure |
| | 182 Simplex Leaving Late |
| | 183 Duplex Side 1 Arrival Failure |
| | 184 Duplex Side 1 Leaving Late |
| | Original Imge Handling |
| 710 | SADF |
| | 711 Entry |
| | 712 Exit |
| 730 | Reduction |
| | 731 Last Failure |

Collator
740 741 Collator Aligner Arrival
742 Collator Aligner Leaving
743 Path Arrival Simplex
744 Path Leaving
745 Path Arrival Duplex
746 Excess Copies in Path
747 Copy Left in Path
748 Vane 1 Home Failure
749 Vane 1 Index Down
Failure

750 751 Vane 1 Index Up Failure
752 Door 1 Open
753 Path 2 Arrival Simplex
754 Path 2 Leaving
755 Path 2 Arrival Duplex
756 Vane 2 Home Failure
757 Vane 2 Index Down
Failure
758 Vane 2 Index Up Failure
759 Door 2 Open

Inspection of Table II above shows that each critical operation of machine 10 is included in the operations error log. For example, in group 120 the aligner 28, which is the input aligner to the transfer station 26, may receive copy sheets too late to produce a good copy. Accordingly, the error log will include which source of copy sheets was associated with the misfeed condition. In group 110 the copy sheet arrived late (slow) at aligner gate 28, but was in time to make a successful copy producing run. The other categories are self-explanatory.

In Table III below certain machine errors are listed. For example, the machine 10 may be constructed for safety purposes to stop operations if a door is open. Therefore, at category 71 any time a door is opened, an error is logged. Categories 62, 63 and 74 relate to machine timing pulses generated in response to the sensing of marks on emitter wheel 46 on drum 20 (Fig. 1). These marks may comprise two synch. marks, the first being a start mark, separated by sixteen emit marks. Category 52 relates to a controlled power supply which senses zero crossing points of a controlling signal. Category 212 relates to partial feed of the photoconductor with a later start, and category 214 relates to partial feed with early stop. The other types of errors listed in Table III are self-explanatory.

Table III—Machine errors

Scan Group        Machine Errors
70        Miscellaneous
71 Door Open While Running
72 CMOS Memory Fail
73 Fuser Undertemperature
74 No 16 Emits Between Syncs
75 Select Paper Length Error

50 Copier-1
51 Memory Fail
52 No Crossovers
53 LED Check Circuit
54 Fuser Overtemperature
55 Optics Overtemperature

60 Copier-2
61 Corona Overcurrent
62 Emit with No Start
63 Start with No Emit
64 Toner Feed Mechanism
65 Reduction

210 Photoconductor Advance Failures
211 Always Inactive
212 Inactive Then Active
213 Always Active
214 Active Then Inactive

Having described the character of errors being logged and their classification, we will now refer to the error logging circuit of Figure 3 which is an exemplary circuit within machine operating circuits 15 for logging errors listed in Tables II and III. A malfunction detection circuit 101, such as of the copy sheet jam detection type, for example, supplies an error signal over line 102 for setting a corresponding error latch 103 to the active condition for memorizing and indicating a detected error condition. There is one of the circuits 101, 102, 103 for each of the errors listed in Tables II and III.

When the operator has cleared the error condition, misfeed reset button 61 is actuated to enable restarting machine 10. At this time a signal is transferred from switch 61 resetting all of the latches 103 and simultaneously sampling the output AND gates 104 for transferring the latched error condition to an encoder 105.

Encoder 105 has a plurality of inputs, one from each of the malfunction detection circuits 101, 102, 103, 104. Depending on which input is actuated, the encoder 105 supplies an encoded signal corresponding to the scan group of Tables II and III; i.e., generates an address for nonvolatile store 175. If a plurality of inputs occur, only one is selected at a time, using known priority or tie-breaker circuits (not shown). The encoder-generated address is supplied from encoder 105 to address circuits 106, operatively associated with CMOS 175. The addressing circuits 106 receiving the address fetch the corresponding log from non-volatile store 175 and supply it over a line 107 to a +1 add circuit 108 and to a limit circuit 110. The +1 add circuit 108 adds one to the fetched contents and returns same to non-volatile store 175 over lines 111 as well as to addressing circuits 106 over line 112. The signal on line 112 actuates addressing circuits 106 to record the incremented value in non-volatile store 175 at the same address corresponding to the scan groups of Tables II and III. Since each register in non-volatile store 175 has a limited modulus, limit circuit 110 ensures that the modulus is not exceeded; i.e., the error count does not go to all zeros. When a limit is reached, which can be a predetermined value for each of the error conditions, add circuit 108 is inhibited with the fetched value being returned to nonvolatile store 175 for maintaining the previous error count. The circuitry 105—112 of Figure 3 can also be used for incrementing counts relating to use of components within machine 10. For example, cleaning station 30 has a rotary brush which wears with usage. Since the cleaning station brush may also be used for impelling air into the cleaner station for entraining the toner particles within the station, nonvolatile store 175 has a count field indicating the number of cycles by the cleaning station 30 brush since its last adjustment. In that case, limit circuit 110 detects the limit of the number of cycles for each brush adjustment and will send a signal over line 115 to appropriate brush advancing circuits in machine operating circuits 15 for advancing the cleaner brush toward photoconductor drum 20, Similarly, photoconductor drum 20 may be constructed such as to require a photoconductor sheet advance after a certain number of machine cycles. The number of cycles for the photoconductor advance may be different from that required for the cleaning brush advance. Accordingly, a separate circuit and a separate limit is set in limit circuit 110 for photoconductor advance. A signal on another line 116 signals machine operating circuits 15 to advance the photoconductor.

CE mode latch 74 also supplies its CE mode indicating signal over line 105A to other circuits, later described. AND circuit 106A is enabled by the line 105A signal to pass the misfeed reset signal received from switch 61. CE mode latch 74 is set to the active condition and reset to the inactive condition by successive actuations of CEB 62. AND circuit 107 is enabled by interlock switch 108A being closed when the doors (not shown) of copy production machine 10 are open, and by the standby mode signal received from machine operating circuits 15 over line 110A.

It may be desired not to log all data for all machines. An encode 105 enable switch 111 enables encode 105 plus the appropriate AND circuit 104 when the designated data is to be logged. In a preferred form, each class of data is enabled to be logged. In a computerized embodiment, logging authorization or enablement is a set of bits in CMOS 175 which enable program controlled logging.

CMOS nonvolatile store 175 now contains all of the various logs of data in preparation for maintenance procedures to be described. Such maintenance procedures are indicated in Figure 5 by numeral 100 as CE usage of the data accumulated in CMOS 175 from the previously indicated diverse sources. Utilization of CMOS 175 is explained with respect to Figures 2 and 4. In a first mode, operations data set forth in Table I is fetched from CMOS 175. Such mode is set up within circuit 70 and indicated by a suitable signal supplied over line 115. The line 115 signal enables OR circuit 116 to pass signals from the start button 59, stop button 60, dark copy button 58, and keyboard 57 to address the operations log in accordance with address or code information introduced through keyboard 57. Since such is a straight addressing function, details of the circuitry are not described. Rather, the procedures described with respect to the Figure 7 flow chart are sufficient to show the type of operation envisioned.

The error log scanning looks for nonzero entries and displays the error class code symbols of Tables II and III whenever a nonzero entry is found. Then upon a further action by a maintenance person, the values contained in the register, i.e., the number of errors logged up to a predetermined maximum, are displayed. The error mode is indicated by decoder circuit 70 supplying a signal over line 117 for enabling an OR circuit 118 to pass signals from the start button 59, stop button 60, misfeed reset button 61 and keyboard 57. The operation illustrated in Figure 2 is detailed in Figure 4 with the functions described with respect to Figure 7.

Adjusting the limits of certain count fields within CMOS 175 that relate to the photoconductor advance and the adjustment of the cleaning brush is indicated by a controlling signal from decoder 70 supplied over line 120 for enabling OR circuit 121 to pass the start button signal, stop button signal, dark copy button signal, misfeed reset button signal, and keyboard 57 signals to decoder circuits 70. Figure 4 illustrates an example of adjusting the limits while procedures are set forth with respect to Figure 7.

A log retrieval mode is entered by entering the digit code 980 through keyboard 57 immediately after setting up the CE mode by actuating the CE switch 62 once, and then actuating start button 59. A decode 125 interprets the input code 980 as a log retrieval mode. Decode supplies a 000 indicia over line 126 to three-digit display 64 and is indicated in Figure 7 as step 127. The start button 59 actuation initiates a scan looking for a nonzero group within the log, while subsequent actuations of start button 59 actuate the control to display the next group with a nonzero value. When the end of the scan of the error log is reached at 849 an additional actuation of start button 59 causes all zeros to be displayed again. This is shown in Figure 7 by the display symbol 128 initially displaying all zeros, checking for the value 849 at 130 and the start button at 131. Start button being checked causes a group to be set, i.e., an address advance for CMOS 175 as at 132. If an element within a group is to be displayed, the start button 59 is not actuated, rather the stop button 60 is actuated at 133 which results in an element address to be set at 134. If there is another keyboard entry from keyboard 57 such as at 135, that entry is set at 136. The darker copy button 58 is checked at 137 for entering in the new keyboard entry. If the number is valid at 138, i.e., one of the codes listed in Tables I, II, III, the contents of the code addressed register are displayed at 139. Otherwise the number entered is displayed and flashed at 140, with the scan of the various buttons at 130, 131, 133, 135 and 137 being repeated until one of them is actuated.

Turning to Figure 4, AND circuit 145 responds to decode 125 error log signal on line 146, keyboard 57 entry received over lines 147, and the stop button 60 actuation as received over line 148 to supply an actuating signal through OR circuit 150 to address register 151. Address register receiving an address signal via keyboard 57 supplies same for addressing a register within CMOS 175. CMOS 175 responds to the address signal to supply the contents of the addressed register over lines 152 to zero detector 153. If a zero is detected, the address register 151 is incremented by a signal supplied over line 154 by detector 153 (scan continues). If a zero is not detected, i.e., the contents of the address CMOS 175 register is nonzero, then an actuating signal supplied over line 155, to actuate AND circuit 156 to pass the contents of address register 151 to display 64, i.e., the group being addressed which is nonzero, is now displayed in display 64. The line 155 signal indicating a nonzero detection also travels to AND circuit 157 which enables display of the numerical contents of the register just read from CMOS 175 and as captured in register 160. AND circuits 156 will continue to display the contents of address register 151 so long as no further operator action is taken. Actuation of dark copy button 58 supplies a signal to AND circuit 157 which is enabled from decode 125 via OR circuit 158 and the line 155 to supply an actuating signal over line 162 to AND circuits 163 for passing the contents of register 160 to display 64. Simultaneously, the line 162 signal deactuates AND circuits 156 for removing the address display from display 64. As long as the dark copy button 58 is actuated, the display will indicate the contents of that register in CMOS 175. A latch (not shown) can be added to the circuits for memorizing that display.

Returning now to Figure 7, it will be remembered that the actuation of the darker copy button 58 enabled the display of the contents of the register addressed by keyboard 57 entry from step 139. The validity of the keyboard entry is validated at 170. If it is invalid then the step 128 is entered. If the keyboard entry actually was a valid actuation, then the keyboard entry is displayed at 171 so long as the darker copy button 58 is actuated. After this procedure, the start button is sensed at 172. If it is actuated, a new group is set at 173 and step 128 is repeated for displaying the group as previously described. If the start button is not actuated then the stop button is sensed for at, 173. If it is actuated, an element is set at 174 and step 128 repeated. On the other hand, if the darker copy button 58 is actuated as at 175, it is displayed in step 171 and the previously described steps are again scanned. If darker copy button 175 is not actuated, then whether or not keyboard 57 has been actuated is checked at 176. If it is actuated, then the keyboard entry is displayed at 177 and the scan of steps 172—176 is reentered. If there is no keyboard entry then the misfeed reset switch 61 is checked at 178. If it is actuated, the contents entered through keyboard 57 are stored at 179. In this regard, actuation of keyboard 57 will automatically go into a register called copy select (not shown), and if the misfeed reset button 61 is actuated, the contents of copy select are stored in another register for use in the CE mode. In any event, the scan 172—178 is repeated until either the start button or stop button are actuated for stepping the scan to the next group or element, respectively.

Further, in Figure 7, if the value in address 130 of Figure 4 is greater than 849, the next value checked is 999 as at 180. If it is not 999 then step 128 is reperformed. If it is 999 then a third scan group of steps are performed. First at 181 start button is sensed for determining whether or not the next groups should be displayed. The stop button is also checked at 182 and the keyboard entry checks at 183, and the midfeed reset button is checked at 184. If the misfeed reset button is actuated, all of the logs in one group are cleared as indicated by step 185. This action is also shown in Figure 4 wherein AND circuit 190 responds to a decode 125 output corresponding to step 180 to enable the signal from misfeed reset switch 61 to actuate sequencer 191. Sequencer 191 has received the address signals from address register 151 and depending upon the value as set forth in Tables I, II, III, will scan through all addresses of each group as indicated by the addresses serially supplied over line 192 to CMOS 175. This action actuates a write or record operation in CMOS 175 with all zeros being supplied over lines 193 for erasing the log. Resetting the scan is indicated by step 130 or 180, is via AND circuit 200 which receives an enabling signal over line 201 from decode 125. The keyboard entry is received over line 147. When both lines are active, register 202 receives the keyboard entry; then supplies the indicated value to limit 203. Limit circuit 203 also receives an address signal from address retister 151. If there is a match, AND circuit 204 is actuated for supplying a signal to address register 151 for resetting same to the lowest value in the group, such as 000, 860, and so forth.

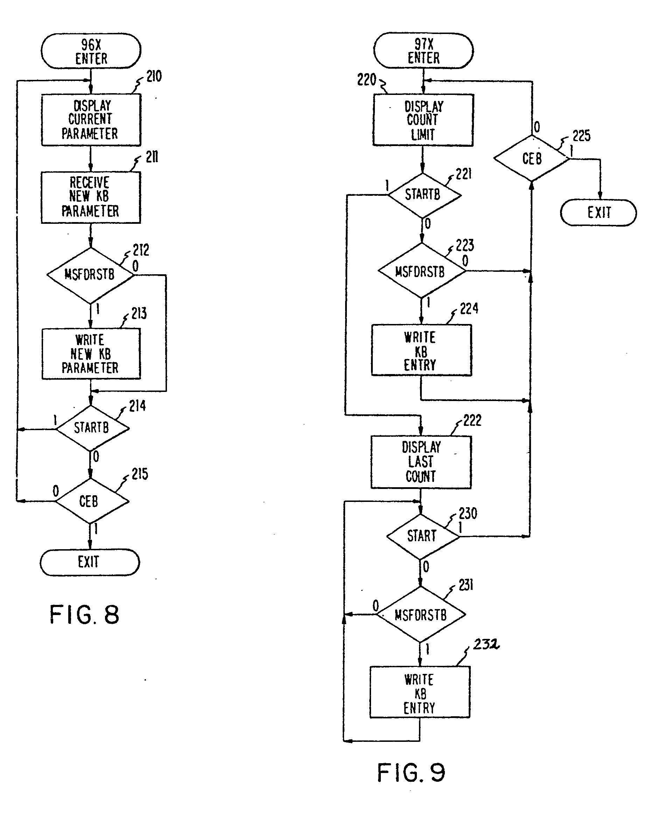

Figure 8 illustrates the operation of decoder circuit 70 for inserting a new parameter within CMOS 175. At 210 the current parameter is displayed. A new keyboard parameter is received at 211 from keyboard 57. Actuation of the misfeed reset button 58 is checked at 212. If button 58 is actuated, then the new parameter is written into CMOS 175 at 213. If the misfeed reset button is not actuated, then the scan goes to start button check step 214. If the start button is actuated then step 210 is reentered. If the start button is not actuated the CE mode button is checked at 215. If it is not actuated then step 210 is reentered. If CE button 62 is actuated, the CE mode is erased and no action is taken.

Figure 9 illustrates the procedure for checking the limits of counters within CMOS 175 which pertain to monitoring operation of the cleaner brush or the photoconductor advance. Two sets of registers are employed. One set of registers contains the limit the unit can be used before an adjustment is required, and the second register set contains the number of cycles performed by machine 10 since the last adjustment. The procedures are entered by entering a digit 97X, where X is one or two, into keyboard 57 and depressing the start button 59 for selecting the mode. The circuits 70 automatically display the count limit in thousands of cycles at 220. If the start button is again actuated as at 221 then the count value corresponding to the limit value is displayed at 221 in display 64. If the start button is not actuated, then the misfeed reset button 61 is checked at 223. If button 61 is actuated, then at step 224, the keyboard 57 entry made between entry of the mode 97X and actuation of the misfeed reset button is written into CMOS 175 as a new limit value. From steps 223, 224, the CE button 62 is checked at 225. If CE button 62 is actuated, the CE mode is exited as previously described; if not, the count limit is continued to be displayed at 220, i.e., in this case it is the new count limit if the misfeed reset button 58 was actuated, otherwise it is still the previous count limit.

The count values displayed at 222 also cause the procedure to go to step 230 for checking the start button. If the start button is actuated then the count limit is again displayed until the start button is again actuated. If the start button is not actuated, then at 231, actuation of the misfeed reset button 61 is checked. The misfeed reset button 61 being actuated causes storage of the contents of keyboard 57 into the appropriate register of CMOS 175 at 232, thereby altering the count in CMOS 175 of the number of cycles performed in copy production machine 10 since the last advance of a photoconductor or cleaning brush. This procedure is useful by maintenance personnel to update the count value in CMOS 175 such that operation of the copy production machine should result in automatic advancement of either the cleaning brush or the photoconductor. The maintenance personnel can in this way verify the operation of those adjustment procedures, as well as adjusting them to automatically cure some intermittent image transfer problem in copy production machine 10.

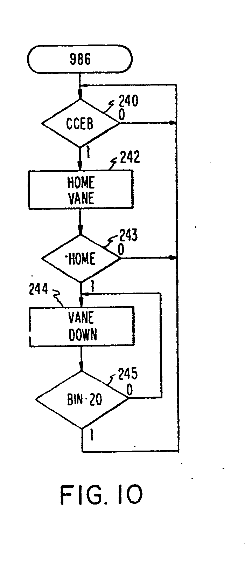

Figure 10 shows a procedure for exercising a copy distributor of the collator under control of the diagnostic modes. A keyboard 57 entry of 986 selects one of the collators for exercising. Once the collator exerciser mode is entered, actuation of the collator CEB 241 iniially causes the vane to go to a home or upward position. This is indicated in Figure 10 by steps 240 and 242. As soon as CCEB 241 is released the vane stops. As soon as the vane reaches home as indicated by step 243 the direction of travel is automatically reversed and a continued actuation of CCEB 241 causes the vane to move away from home in a downward direction as indicated by step 244. When the vane has reached the buttom of the collator, i.e., bin 20 as at 245, the direction is again reversed and the vane is stepped toward home.

In addition to the above functions, a bin counter (not shown) is actuated and can be read out to indicate to the maintenance personnel the success of that type of control with respect to the collator operation. Other variations of such exercising tests are performed with copy production machine 10 using the above-described procedures.

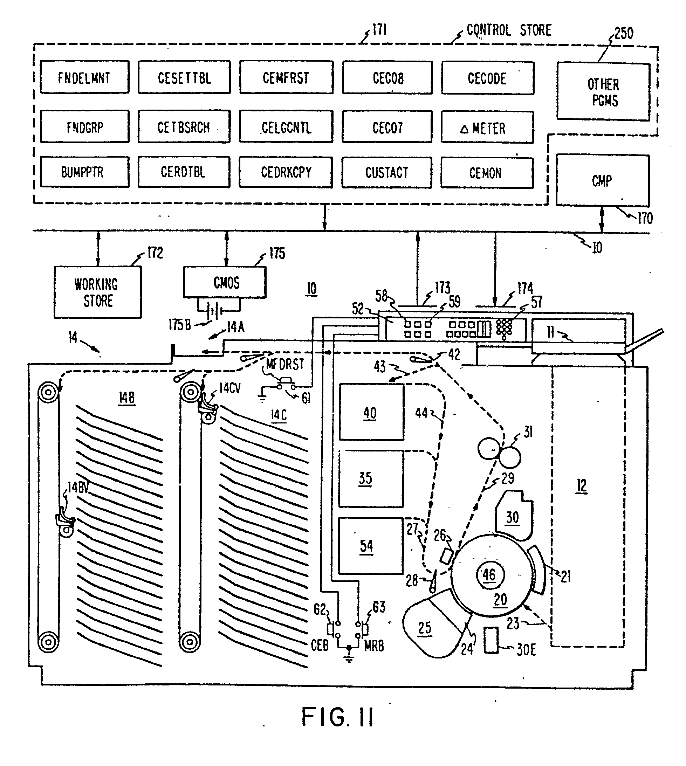

Figure 11 shows a preferred embodiment of the invention wherein all of the diagnostic procedures are executed under supervision of a control microprocessor facility. The copy production machine 10 is constructed as shown in Figure 1 with the control being exercised over copy production machine 10 with a set of output registers 174 which receive control signals from a bidirectional data bus IO which in turn receives the control signals from copy microprocessor or CMP 170. CMOS 175 is also connected to IO for exchanging data signals with CMP 170. In addition, a volatile working store 172 of the semiconductive type (random access memory) is used in connection with control of copy production machine 10. A set of input registers 173 are connected to a plurality of sensing points (not shown) within copy production machine 10 as well as the inputs of control panel 52 which includes, of course, keyboard 57. The heart of the procedural control by CMP 170 is in a ROS (Read only store) control store 171 which includes a plurality of sets of program indicia to which CMP 170 responds for controlling copy production machine 10 in accordance with other programs 250. These other programs 250 control machine 10 in accordance with known process and machine control techniques. Accordingly, they are not described because they add nothing to an understanding of the present invention. Program indicia in control store 171 also include a CEMON program which is a supervisory type program for interpreting the setup commands for diagnostic procedures. Associated with CEMON is a CUSTACT program which provides limited access to CMOS 175. The log retrieval is embodied in programs CEC07 and CEC08. These programs enable CMP 170 to operate with related programs such as CEMFRST which enables CMP 170 to respond to actuation of misfeed reset button 61, CELGCNTL which is a log control program, CEDRKCPY which responds to the CE dark copy switch 58, a CESETTBL program for enabling entries of keyboard 57 parameters into CMOS 175, CETBSRCH enabling looking for certain entries in CMOS 175, CERDTBL which reads the data from CMOS 175, FNDELMNT which is a find element program which finds the elements of the Tables I, II, III, FNDGRP which finds the groups of Tables I, II, III, and BUMPPTR which adjusts the memory pointer for incrementing the memory scan.

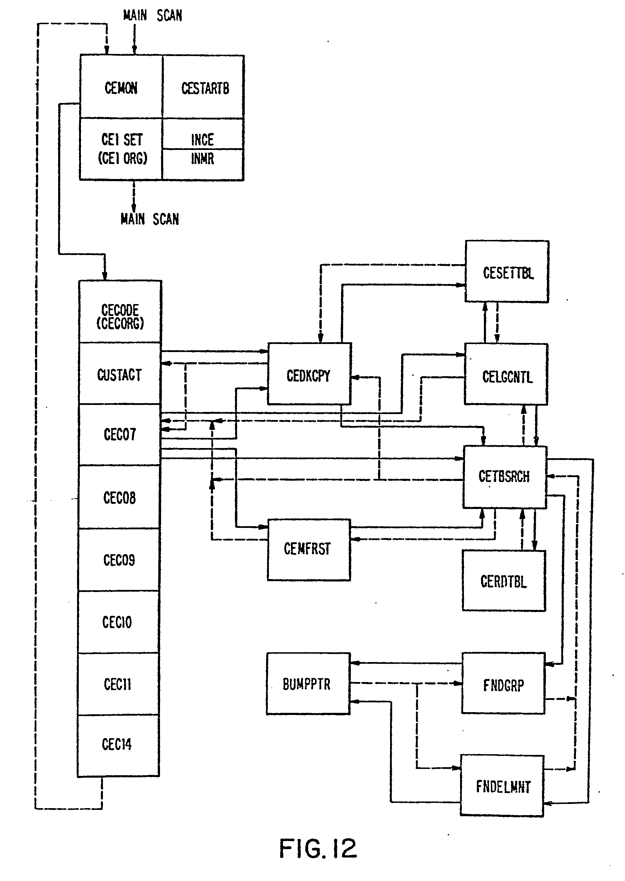

The procedures performed by the CMP 170 in the diagnostic mode are set forth in Figure 12. A main scan, such as an idle scan of CMP 170, actuates CEMON when CEB 62 is actuated. In connection therewith there are other programs CE1SET, CESTARTB and subroutines which integrate the actuation of the CE button 62 and the momentary run button 63. Main scan is returned to from CE1SET, which is a program which resets flags in the working store.

As soon as the CE mode is reentered, CMP 170 has to determine what has to be done. This determination is achieved in CECODE, followed by the execution of the procedures represented by the program indicia of CUSTACT and CEC07 through CEC14, which then returns to CEMON. CUSTACT and CEC07 are the procedures with which we are primarily concerned here. These two procedures have an operational relationship with other procedures through CMP 170, such as the previously mentioned CEDKCPY, CEMFRST and the other program indicia indicated in Figure 12. The solid lines indicate program calls, i.e., actuation or call of CEDKCPY is from CUSTACT or from CEC07, for example. Returns of such calls are indicated by the dashed lines. Accordingly, the heirarchy of procedures in the diagnostic mode can be checked by tracing thse lines in Figure 12.

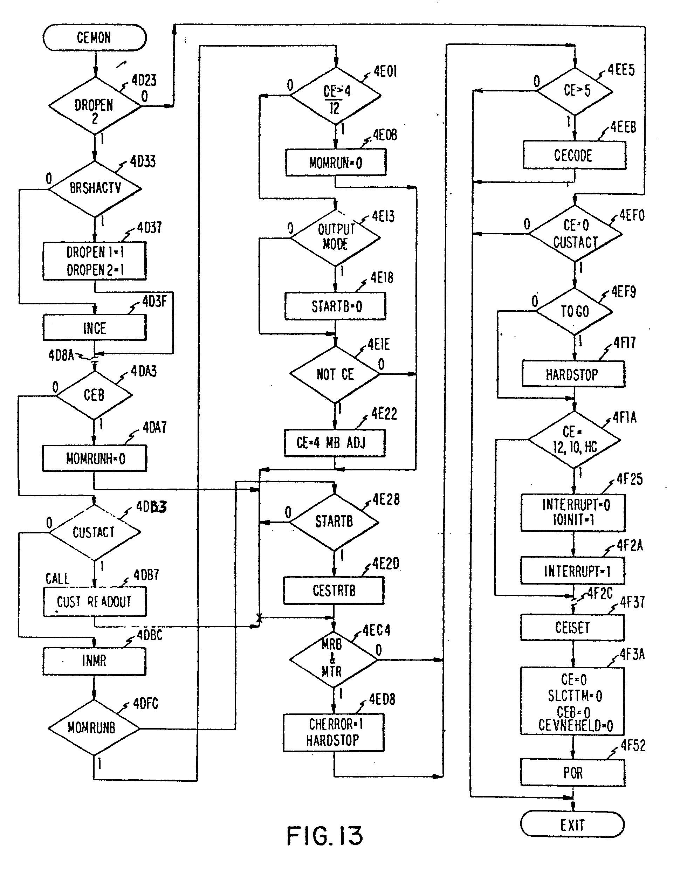

Figure 13 illustrates the detailed procedures of CEMON.

CEMON is shown in Figure 13. These procedures first check at 4D23 to see whether or not the doors to copy production machine 10 are open. Such doors, not shown, actuate interlock switches (not shown) for indicating whether or not the doors are open. If the doors are open, then the operation of copy production machine 10 is usually inhibited and it is interpreted by computer control 170, 171, 172, 173, 174 175 that either the CE mode or some other procedure outside of normal copy production is to be employed. If the doors are closed then copy microprocessor 170 proceeds immediately to step 4EF0, later described. With the doors open, copy microprocessor 170 checks at 4D33 to see whether or not a cleaning brush within cleaning station 30 is being advanced toward photoconductor drum 20. If the brush is being advanced then the door open flags DROPEN1 and DROPEN2 are both set to unity. These bits are addressable bits within working store 172 (Figure 11) and not shown for simplifying the drawing. If the brush is being advanced, the advance must be completed before further machine 10 action is permitted. The maintenance persion signifies completion.

If the cleaning brush of station 30 is not being advanced, then the CE button 62 actuation is checked by a digital integration procedure INCE at 4D3F. Some other steps not pertinent to the present invention are performed at 4D8A. The integration of the CE button 62 at 4D3F will result in setting a bit flag to "1" in a bit position of working store 172 indicating successful integration of the CE switch 62. This flag is checked at 4DA3. If CE switch 62 was actuated, then a second flag in working store 172 STARTB is reset, as well as a MOMRUN flag which corresponds to momentary run switch 63. From 4DA7 copy microprocessor 170 goes to 4EC4 as later described. If the CE switch 62 was not actuated then at 4DB3 copy microprocessor 170 checks to see whether or not CUSTACT is active, i.e., nonmaintenance personnel are operating with machine 10 for performing predetermined functions. If so, then at 4DB7 CECORG is called and executed as later described. If CUSTACT is zero, then the momentary run switch 63 actuation is checked by digital integration at 4DBC. Such integration is a program which enables CMP 170 to measure time of contact closure to define an actuation. The success of such integration is checked at 4DFC by checking flag MOMRUNB which when set to the active condition signifies that switch 63 had been actuated. If MRB 63 was not actuated, then the start button is checked at 4E28. The operation of the start button 59 is the same as described for Figure 1. If it was actuated, then a flag CESTRTB is set at 4E2D. Such flag is a bit position in working store 172.

On the other hand, if MOMRUNB equals one, then copy microprocessor 170 at 4E01 checks to see what value is inserted into working store 172 via keyboard 57. Such indication would include checking whether or not a CE mode enumerated greater than four is active; and that CEC11, the output mode as described with respect to circuit 137, has not been selected. The CE modes are enumerated from 1—N, each mode relating to a different maintenance function. A CE mode of zero indicates normal copy production. If both those conditions are met, then MOMRUN is set to a zero to 4E0B, otherwise the output mode of CEC11 is checked at 4E13. If the CE mode is output mode, then the STARTA and STARTB flags are reset at 4E18. Otherwise, copy microprocessor 170 goes directly to step 4E1E to check to see whether or not the CE mode is active. With CE equal to zero it is not the CE mode and the step at 4EC4, later described, is performed. Otherwise, at 4E22 copy microprocessor sets the CE mode indicator to four which is a reference number useful in the maintenance mode.

At 4EC4 copy microprocessor 170 checks to see whether copy production machine 10 is in a go state (enabled to be started) and that the momentary run button 63 has not been actuated. If these two conditions are satisfied, copy production machine 10 must be stopped immediately at step 4ED8 as indicated by "HARDSTOP" and an error condition flag is set in working store 172. If the conditions are not met, then copy microprocessor 170 goes directly to 4EE5 to check to see whether or not the CE mode selected via keyboard 57 is greater than five. If it is, then CECORG is called and executed as later described. If not, the procedure is exited.

Returning to 4D23, if the doors are open, then at 4EF0 the copy microprocessor 170 checks to see whether the CE mode is inactive (CE=0) or CUSTACT is active. If either is the case, then at 4EF9 copy microprocessor 170 checks to see whether or not copy production machine 10 is to "go" or is in a so-called hand crank mode. If it is to "go", the error flag referred to above and the hard stop of copy production machine 10 is executed at 4F17. Machine 10 should not be operating when the doors are open, hence the hard stop. Alternately at 4F1A the CE mode's output corresponding to circuits 70, a lamp test mode (not described), or a so-called hand crank mode is checked. If any of these are active, then all of the output registers 174 are initialized to a reference state, preferably all zeros, at step 4F25. Finally, the last procedures of Figure 13 are at 4F2C wherein the power relay number two is deactivated for protection of the maintenance personnel, initializing flags for CE1 mode, i.e., the first actuation of CE switch 62 are set. The CE mode is set to zero, i.e., the numerical input to keyboard 57 has not yet been interpreted by copy microprocessor 170 and SLCTTM is set to zero. This latter flag in working store 172, causes copy microprocessor 170 to ignore copy parameter selections made via control panel 52. the vane held flag (prevents collator vane from moving) is reset for enabling copy microprocessor 170 to actuate the collator vanes 14BV and 14CB to move in collators 14B, 14C. Finally, a power on reset procedure POR2 is then executed at 4F52. That procedure initializes copy production machine 10 under control of copy microprocessor 176 and is not pertinent to the practice of the present invention. It should be noted that steps 4EF0

through 4F52 are executed only if the doors are closed as detected by copy microprocessor 170 at 4D23.

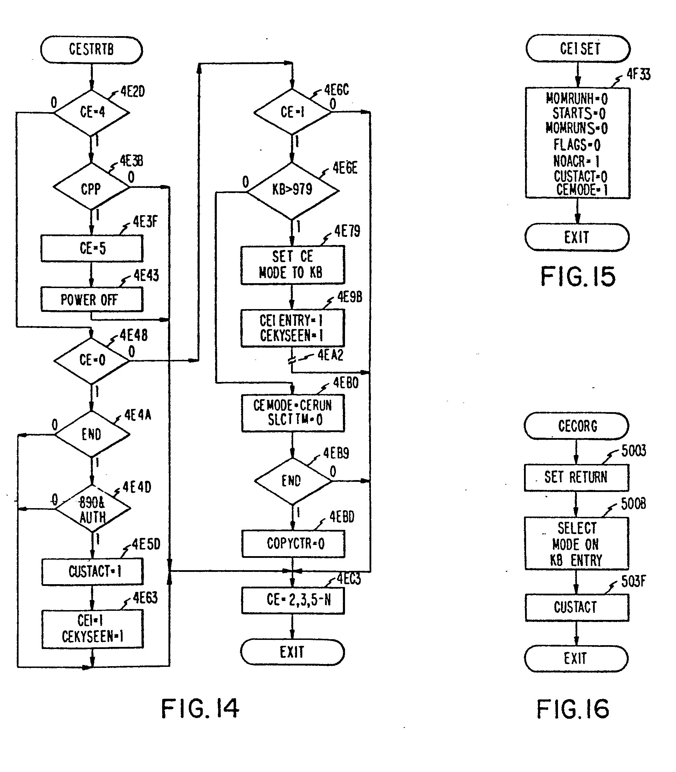

Referring next to Figure 14, the response of CMP 170 to the actuation of the start button 59 is shown in detail. At 4E2D the value of the CE mode is checked. If it is not 4, then it is checked at 4E48 for "0", as later described. If the CE mode is four, then at 4E3B whether or not a check paper path (CPP) condition exists is checked. If not, then at 4EC3 the value of the CE mode is set to one of 2, 3, or 5—N and the procedure terminated. On the other hand, if it is CPP at 4E3B, the CE mode is set equal to five; i.e., log retrieval. Power off is then commanded at 4E43.

If it was not CE mode=4 at 4E2D, then whether or not it is CE mode at all is checked at 4E48. If it is not CE mode (CE=0), then the END flag of working store 172 is checked at 4E4A. The END flag signifies a normal ending of copy production by machine 10. If it was a normal end, at 4E4D the nonmaintenance access to certain logs is verified. That is, the numeral 980 must be entered through KB 57 and an authorization bit (not shown) within CMOS 175 must have been set to unity. If both of these conditions are met, CMP 170 at 4E5D sets CUSTACT to unity for indicating a nonmaintenance access to CMOS 175 operation logs. The error logs are not normally accessible through this coding technique. Then at 4E63 the CE1 flag is set to unity and the CEKYSEEN flag which indicates that the CE button has been actuated is also set. This procedure portion is terminated via 4EC3 from either 4E63, 4E4A or 4E4D.

If at 4E48 the CE mode was indicated (CE≠0), then at 4E6C whether or not the value of the CE mode is equal to one is checked. If it is a one, then at 4E6E the value of the keyboard 57 entry is checked to see whether or not it is greater than 979, (979 is a threshold value for selection). If the value is greater, then at 4E79 the CE mode is set to the value corresponding to a value entered into KB 57. Then at 4E9B, the flags CE1ENTRY, which indicates that the CE1 mode has been entered and CEKYSEEN are set. Some nonpertinent code is executed at 4EA2 and the procedure terminated via 4EC3. On the other hand, if the keyboard 57 entry was less than 979, at 4EB0 the procedure calls for making the CE mode equal to the CE run mode; i.e., some diagnostic procedures are to be performed. SLCTTM is reset. Then the END flag is checked at 4EB9. If it was unity, i.e., a normal end of copy production, then at 4EBD COPYCTR (copy counter) is reset to zeros.

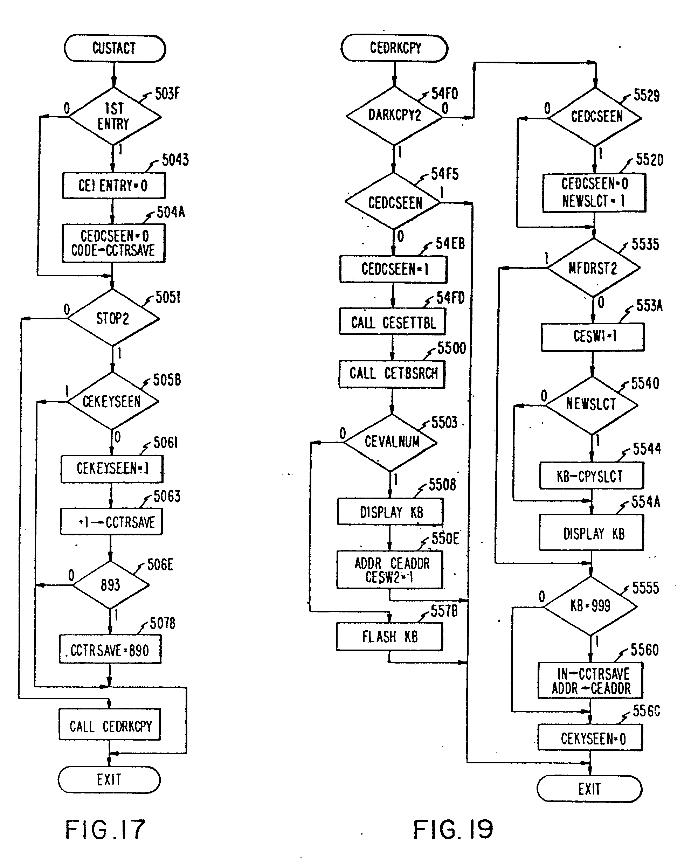

Figure 15 shows the CE1SET program. CE1SET procedures are relatively simple in that several flags in working store 172 are merely reset. This includes the momentary run indicator for switch 63, a start integrator for the start button 59, momentary run switch 63 integration routine flag, and many other flags are reset to zero. NOACR is set to one because no copy recovery will be permitted in the CE mode. CUSTACT is zero because actuation of the CE button 62 indicates to copy microprocessor 170 that maintenance personnel are working on the copy production machine 10, rather than a nonmaintenance operator. Finally, a flag CEMODE is set to one for indicating to copy microprocessor 170 in later described procedures that, in fact, copy production machine 10 is in the maintenance mode.

Figure 16 illustrates the procedures for CECORG. This set of procedures is executed by copy microprocessor 170 only on call from other procedures such that a return is set at 5003. The keyboard 57 entry is interpreted at 500B and the CE mode selected by the maintenance personnel via keyboard 57 is selected. CUSTACT is executed as indicated at 503F (the first step of CUSTACT) as detailed with respect to Figure 17.

Figure 17 shows the CUSTACT procedures which allow an operator access to a limited portion of CMOS 175. The first entry, i.e., the first actuation of CE switch 62, is checked at 503F. The first entry is represented by CEM latch 74 of Figure 3 being toggled to the active condition. A bit condition within working store 172 stores this same information. If it is the first CE entry, then at 5043 the CE1 ENTRY flag is reset to zero, and at 504A the CEDCSEEN (dark copy switch actuated) flag is also reset to zero (CEDCSEEN=CEMODE, dark copy switch 58 was actuated and detected). The above two steps indicate that actuation of the CE button 62 was the second actuation; i.e., the first entry step at 503F indicated switch 62 had previously been actuated.

Then at 5051, a STOP2 flag of working store 172 is checked. If STOP2 is active, stop button 60 had been actuated and accepted by copy microprocessor 170. Then at 505B the CEKYSEEN flag is checked to see whether or not CE switch 62 had previously been logged as actuated. If not, then the flag is set to unity at 5061. Further, at 5063 one is added to the CCTRSAVE field of working store 172 which holds the address of CMOS 175. This means that the actuation of the stop button 60 increments the count field in CCTRSAVE to advance the address of CMOS 175 within a group. Then at 506E the address value 893 is checked to see whether or not it has been received from keyboard 57. If so, then CCTRSAVE is set to value 890 at 5078. That is, 890 is the lowest value used in CUSTACT. Each time the stop button 60 is actuated, the CCTRSAVE field value is incremented until 893 is reached, at which time it is reset to the initial condition 890. If the stop button had not been actuated at 5051, the CEDRKCPY routine is called for determining whether or not dark copy button 58 is actuated.

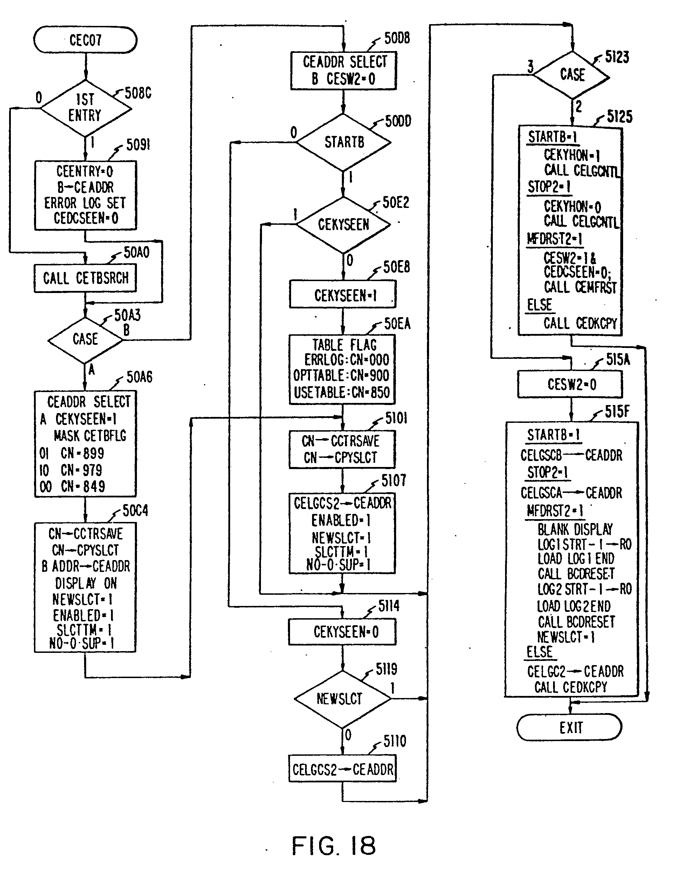

Figure 18 shows the log retrieval procedures as set forth in CEC07. At 508C the first actuation of CEB 62 is checked. If a first entry flag had been set in working store 172, then it is the second actuation and 5091 is executed. CE entry flag is reset and a value B, which is used to initiate a subroutine described below, is supplied to a register in working store 172 which is defined as a second address register, error log mode is set and the flag CEDCSEEN is reset. Each flag is an addressable bit position within working store 172. On the other hand, if this is the first entry into the CEC07 since actuation of the CE button 62 and the start button 59 (first entry flag=0), then at 50A0 CMP 170 calls the later described procedure CETBSRCH for searching for an item to be displayed. At 50A3 case A or B is to be executed. In case A, at 50A6 CMP 170 does a CE address select. First CEKYSEEN is set to unity. This means that the key actuation on panel 52 has been interpreted by CMP 170. The CE table flags are interpreted as follows. If the common number CN (number inputted via keyboard 57) is a maximum of 899, then the A bits are 01; if CN is 979 then the A bits are 10; or if the CN is 849 then the A bits are 00. It will be remembered from the earlier description that these correspond to the three log modes as previously described. At 50C4 the CN entered from keyboard 57 is transferred to two registers within working store 172 called CCTRSAVE and CPYSLCT. The address at location B of working store 172 is then supplied to the CE address register. Display 64 is turned on and the following flags are set: NEWSLCT is set to indicate that a new selection has just been honored; ENABLED which means the display 64 is enabled; SLCTTM which indicates CMP 170 will honor the next actuation of a button or switch from panel 52; and NOOSUP which suppresses normal copy production operation. From case A the step 5101 is executed as later described.

Case B causes CMP 170 at 50D8 to do a CE address selection with CESW2 equal to zero. CESW2 is a flag for controlling the operation in the diagnostic mode, as will become apparent. The start button is sensed at 50DD. If STARTB=1, then the CEKYSEEN bit is checked at 50E2. If it is on, then CMP 170 performs step 5123 as later described. If CEKYSEEN is off, it is set to the active condition at 50E8. Following step 50EA, table flags are set for the error log. The CN is all zeros. For the operations table, CN is 900, while for the usage table CN is 850. Note these values compare with the values described earlier with respect to the earlier embodiment.

CMP 170 at 5101 transfers the appropriate CN as selected by keyboard 57 to CCTRSAVE and CPYSLCT. Then at 5107 an address corresponding to procedures CELGCS2 is sent to the CE address register in working store 172. The ENABLED NEWSLCT, SLCTTM and NOOSUP flags are set as described earlier with respect to 50C4. Then CMP 170 goes to 5123.

If the start button 59 had not been actuated, the CEKYSEEN flag was reset at 5114. Following this reset operation, the NEWSLCT flag is checked at 5119. If a new selection had been honored, then CMP 170 goes directly to 5123. On the other hand, if it is not a new selection in this pass through the procedures, then the address of CELGCS2 goes at 5110 to the CE address register within working store 172.

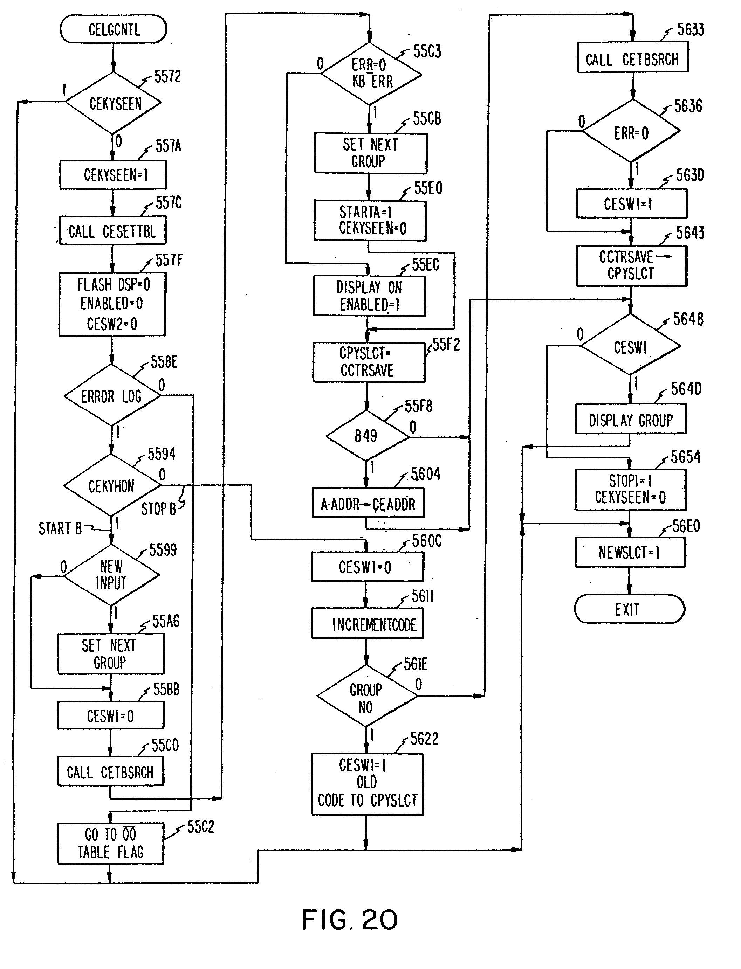

At 5123 CMP 170 checks for procedures case 2 or 3. Procedures case 2 calls for step 5125 with the following functions performed. If the start button 59 is actuated then the flags CEKYHON is set to unity. This means the start button has been honored. A CELGCNTL procedure is then called, as later described. If the stop button 60 has been actuated, as indicated by STOP2=1, then CEKYHON is reset which means the CE key can be honored. The same routine mentioned above is then called. If the misfeed reset button 61 has been actuated, then the flag CESW2 is set and CEDCSEEN is reset. These flags are bit positions within working store 172. If none of the panel 52 switches mentioned above have been actuated, then the CEDKCPY procedure (Figure 19) is called for checking actuation of the dark copy button 58.

Case 3 causes CESW2 to be reset at 515A. At 515F several switches on panel 52 are checked. If start button 59 has been actuated, then the address for CELGSCB is sent to the CE address register. If the stop button 60 had been actuated, then CFLGSCA is sent to the CE address register. These two address values will be used later as will become apparent. If the misfeed reset button 61 had been actuated, then display 64 is blanked and the presently addressed log of CMOS 175 is cleared and the NEWSLCT flag is set to one, indicating a new selection has been acknowledged. This new selection is a command to CMP 170 to clear out all of the logs in the group of logs as set forth in Tables I, II or III as addressed by keyboard 57. If all of the logs of codes 850—889 are to be cleared, number 988 is entered via keyboard 57, the start button 59 is actuated to enter the mode and then the misfeed reset button 61 is actuated. CMP 170 responds to clear (zero) all these logs. If none of the above occur, then the CEDKCPY procedures are called as in case 2, but additionally CELGCS2 is sent to the CE address register of working store 172 for use later.

From the previous description it was noted that the actuation of the dark copy selection button 58 plays an important role in the diagnostic procedures. Figure 19 illustrates the response of CMP 170 to actuation of that switch. If button 58 was actuated, then the actuation of CE switch 62 is checked at 54F5. If both had been actuated, the procedure is terminated. If only the dark copy button 58 had been actuated then at 54EB the flag CEDCSEEN is set. Then log related procedures are invoked at 54FD and 5500, as later detailed. Then at 5503 whether or not the diagnostic information is valid is checked. If it is valid and the keyboard 57 entry is also valid, the value entered into keyboard 57 is displayed in display 64 at 5508. Then at 550E CESW2 is set while a second address field is set into the CE address register. If the number entered into the system by keyboard 57 is not valid, then the entered number is flashed at 551B.

If dark copy 58 had not been actuated, then at 5529 the CEDCSEEN flag is checked. If it is adtive, the flag is reset to zero at 5521 and a NEWSLCT flag is set indicating a new operator parameter selection is expected. Then at 5535 the actuation of misfeed reset switch 61 is checked. If it was not actuated, then the flag CESW1 is set to unity at 553A. Also, NEWSLCT flag is checked at 5540. If it is unity, then the new selection has been made via keyboard 57 and the value entered through keyboard 57 is transferred to the CPYSLCT register (not shown) in working store 172. The value is also displayed in display 64.

At 5555, the value of the keyboard 57 entry is checked to be 999 which is a reference or reset entry. If it is 999, then the inputted number is supplied to CCTRSAVE register of working store 172. In any event, at 556C CEKYSEEN flag is reset.

Figure 20 illustrates the procedures used in connection with the log control; i.e., fetching data from CMOS 175. At 5572, the CEKYSEEN flag is checked. If a key on panel 52 was actuated and had not been processed, then CEKYSEEN is set to unity at 557A. Then at 557C a later described procedure CESTTBL is called. A plurality of flags are reset at 557F including turning the display 64 off and resetting flag CESW2. At 558E the procedure checks whether or not an error log is to be accessed. If it is an error log, then at 5594 the CEKYHON flag is checked. This flag indicates whether or not a key actuated was honored (detected). If the start button 59 was actuated, then at 5599 whether or not a new KB 57 input has been received is checked. If it is a new input, the next group is set at 55A6. This means the next group of elements, as set forth in Tables I, II and III. If there was no new input, then at 55BB the procedures immediately reset CESW1. Then CETBSRCH is called at 55C0 for searching for the memory pointers to read the data stored in CMOS 175. If it is not an error log at 558E, then at 55CE the table flag $\overline{00}$ is set to indicate the procedure is for operations data log accessing.

At 55C3, the value of the error is checked and whether or not a KB 57 error has occurred. If so, then the next group is set at 55CB; that is, in the error log scan the display will remain disabled as long as no error conditions are found. Then at 55E0 a STARTA flag is set and the CEKYSEEN flag is reset for enabling analysis of the next actuation of a switch on panel 52. If there was an error detected, such as indicated at 55C3, then at 55EC the enable flag is set to the active condition for enabling display 64. At 55F2 CPYSLCT is made equal to CCTRSAVE. This action transfers the backup value of KB 57 entry to the register CPYSLCT in working store 172. Individual registers in store 172 are not illustrated for purposes of brevity, it being understood that such registers are addressable within working store 172, as is well known.

At 55F8, the code value 849 is checked, (849 is the upper value for accessing CMOS 175 in the illustrated mode). If the value is 849, then at 5604 the base address for case A is transferred to a CEADDR address register in working store 172. Then at 5648, CESW1 is checked. If it is a unity, then at 564D the group number of CMOS 175 is displayed. Then at 56E0, NEWSLCT is set to unity.

Returning to 5594, if CEKYHON was zero, then at 560C the flag CESW1 in working store 172 is reset. The value of the address, i.e. as indicated by the code originally entered by KB 57, is incremented at 5611. At 561E, the incremented group number is checked as to whether or not a new group is being entered; i.e., the new groups as set forth in Tables I—III. If a new group is signified, at 5622 the flag CESW1 is set to unity and the old address is set to CPYSLCT, all within working store 172. If a new group is not signified at 561E, then at 5633, CETBSRCH is called, as will be later described. If the logged error is not zero at 5636, then CESW1 is set to unity at 563D for enabling display of the code corresponding to the readout nonzero error. Then at 5643, the contents of CCTRSAVE are supplied to CPYSLCT.

Returning to 5648, if CESW1 was not set, then at 5654 STOP1 is set to unity for enabling integration of the stop button 60 and the flag CEKYSEEN is reset for enabling acknowledgement of actuation of the stop button 60. It will be remembered that actuation of the stop button 60 steps the scan within a group to the next element of that group for locating a nonzero error code.

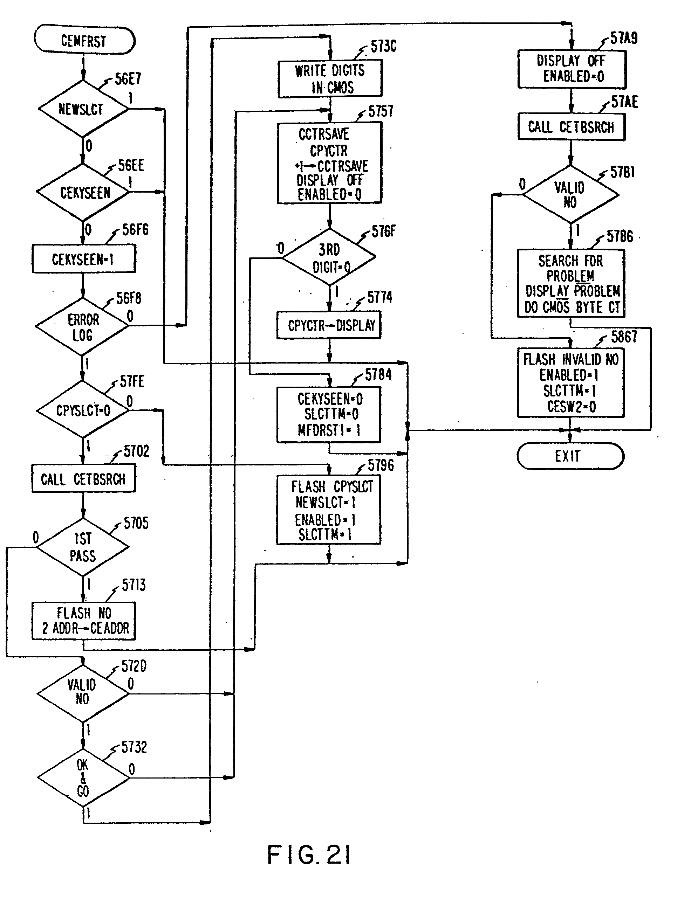

As previously described, the misfeed reset button 61 is an important operator interaction vehicle. Figure 21 illustrates the procedures performed in connection with actuation of the midfeed reset button 61. At step 56E7, the flag NEWSLCT of working store 172 is checked for activity; i.e., has a new KB 57 input been supplied? If not, then the previously described flag CEKYSEEN is checked at 56EE. If it was not set, that flag is set at 56F6. Otherwise, from 56E7 and 56EE the procedures are terminated.

Whether or not an error log is being sensed is checked at 56F8. If not, the enabled flag is reset at 57A9 for turning display 64 off. Then CETBSRCH is called at 57AE, such procedure is described later. At 57B1, whether or not the KB 57 entry is valid is checked. If it is valid (a code number of Tables I, II or III has been entered) then at 57B6 the procedures search for the problem to display the problem, i.e., the code, and do a byte count of the entry being checked. This is done because the CMOS 175 entries are variable length; i.e., one entry may be a one byte register or two byte registers, three byte registers, up through six byte registers, for example. If the number is not valid, then at 5867, the KB 57 is inputted number is flashed on display 64. The display 64 is enabled by setting the ENABLE flag while enabling the keyboard 57 by setting flag SLCTTM. Also, flag CESW2 is reset.

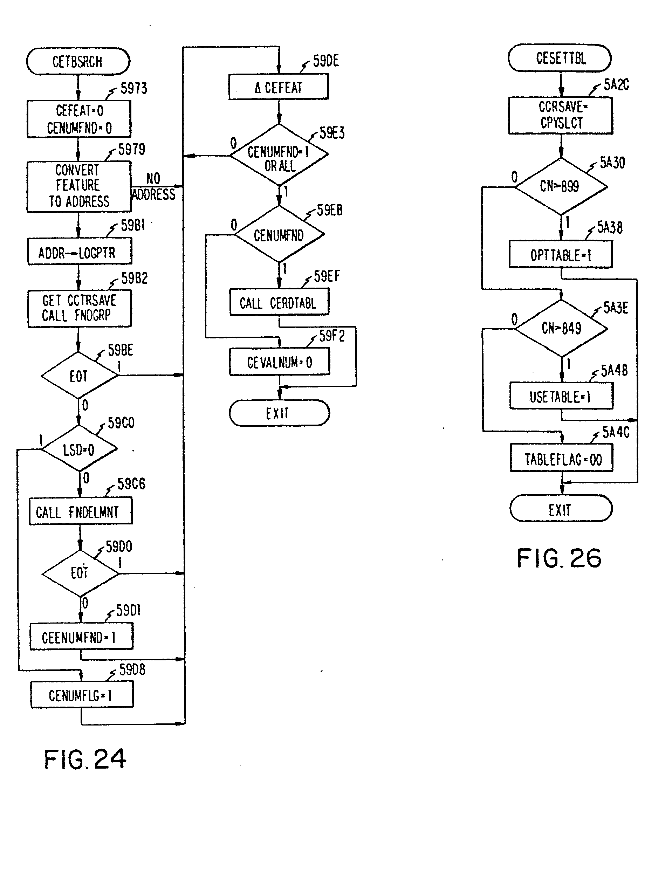

Turning to 56F8 in the procedure, if the procedure is for an error log, then the value of CPYSLCT is checked at 56FE. If it is not zero, then at 5796 the value in CPYSLCT is flashed on display 64, new selection is enabled, display is enabled and the fact that a new selection was made is noted. If the value of CPYSLCT is zero then CETBSRCH procedures (Figure 24) are called at 5702. Then at 5705 whether or not it is the first path through this particular procedure is checked. If it is a first pass, the number is flashed at 5713 and a second address is sent to the CEADDR register of working store 172 and the procedure is terminated. If it is not the first pass at 5705, then the validity of the number is verified at 572D. If it is valid, then the conditions of the machine are checked at 5732 to see whether or not a go condition is provided. If so, then the digits entered by KB 57 are written into CMOS 175 at step 573C, at the address contained in CEADDR. If the situation is not ready to write into CMOS 175 then at 5757 the value contained in CCTRSAVE is supplied to CPYCTR, both registers in working store 172. The value in CCTRSAVE is then incremented for getting the next log address in CMOS 175. Display 64 is turned off by resetting the ENABLED flag. At 576F the value of the third digit of a three digit number in three byte registers of CMOS 175 is checked. If the third digit is zero, then at 5774 the value stored in CPYCTR is supplied to display 64 and the procedure terminated. If the third digit is nonzero at 576F then at 5784 the CEKYSEEN and SLCTTM flags, previously described, are reset and MFDRST1 (miss-feed reset) is set to unity indicating that the misfeed reset button 61 is being actuated. Then the procedure is terminated.

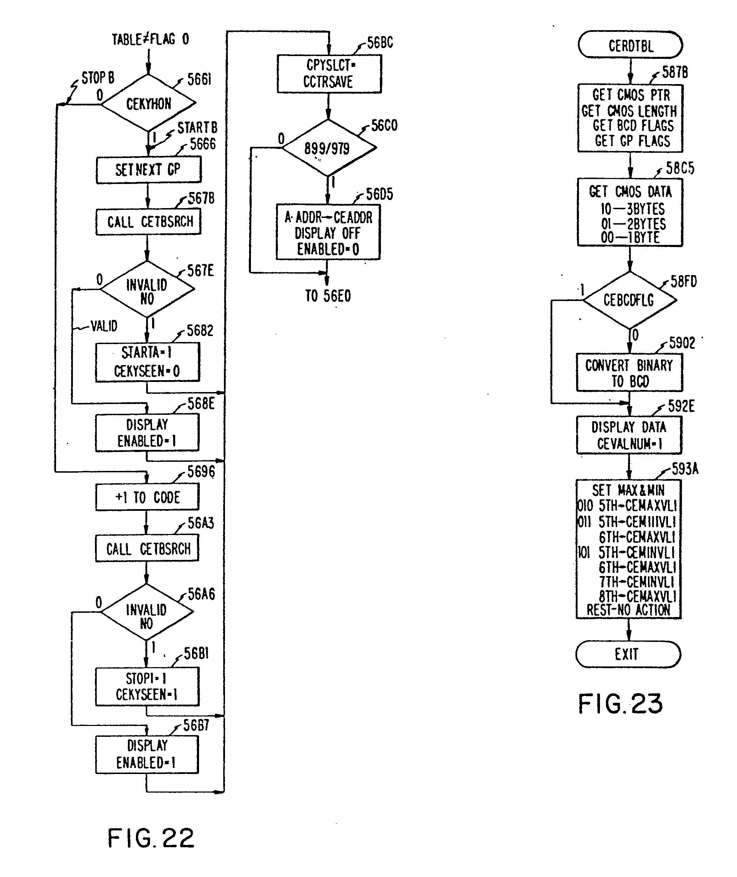

Figure 22 illustrates a procedure for handling the table flags with respect to addressing registers in CMOS 175. It will be remembered in Figure 20 that the table flag would indicate the category of accessing to CMOS 175. If the table flag is not zero, then at 5661 the flag CEKYHON of working store 172 is checked. If it was a one, then start button 59 was actuated and the next group is set at 5666, it being remembered that actuation of start button steps from one group to the next group while actuation of the stop button 60 actuates stepping berween elements within a group.

After the next group is set at 5666, the CETBSRCH procedure is called at 567B. The validity of the KB 57 number is checked at 567E. If it is not valid, then STARTA is set to one and the flag CEKYSEEN is reset at 5682. If the number is valid, then at 568E the display is enabled and the valid number is displayed without flashing in display 64. Following these steps, at 56BC the CPYSLCT register receives the numerical contents of CCTRSAVE. This action transfers the backup value to the operating value in registers within working store 172. Then at 56C0 the values 899 or 979 are checked; i.e., these are the upper limits of the log scans of CMOS 175 as previously described. If the limits are reached, then at step 56D5 the lower or base address code is transferred to the register CEADDR in working store 172 and the display 64 is disabled.

If CEKYHON=0 at 5661, the stop button 60 was actuated. At 5696 unity is added to the present number which will designate the next CMOS 175 address. The address is obtained by CETBSRCH from the call at 56A3. Validity is checked at 56A6. If invalid, at 56B1 the indicated flags are set and step 56BC entered. Otherwise, (number is invalid) the display 64 is enabled at 56B7 and step 56BC entered.

Going to Figure 23, the procedures are set forth for reading numerical contents of addressed CMOS 175 registers. At 587B, the pointer to the register to be read (based on Tables I, II and III codes) is fetched along with the byte count, the group flags, and the binary coded decimal indicator flag. Then at 58C5 the actual data stored in CMOS 175 is read out in accordance with the flag 10 indicating three bytes, 01 indicating two bytes, and 00 indicating a single byte of data. Sequential reads of memory are well known and not further described for that reason. At 58FD, the flag CEBCDFLG is checked. If it is unity, then the data just read out from CMOS 175 is already in binary coded decimal, therefore can be displayed directly on display 64 without binary-to-decimal conversion. If it is not in BCD, then the binary data is converted to BCD at 5902. Finally the data is displayed in display 64 at 592E and the flag CEVALNUM is set to unity for indicating display of a valid number in display 64. It should be noted that display 64 is three bytes long; however, if only two bytes are read, those two bytes are displayed in the lower two significant digit positions of display 64. Finally at 593A, maximum and minimum values are set, all in connection with the length control of the data from CMOS 175. Since only three digits can be displayed at a time, action is required only if more than three digits are involved; i.e., five, six, seven or eight digits. This procedure provides for tracking which three digits are being displayed on the multidigit numbers. In general, for a six digit number the most significant three digits are displayed first followed by the lower three significant digits.

Referring to Figure 24, the previously referred to procedure CETVSRCH is shown and described. This procedure searches the tables in working store 172 for accessing the desired register of CMOS 175 as indicated by the KB 57 entry or those values calculated based upon a KB 57 entry. At 5973, the flags CEFEAT and CENUMFND are reset. These flags respectively indicate that a feature is being changed by the maintenance personnel or that a proper number being sought was found; i.e., the search is just starting. At 5979, the KB 57 input or feature is converted to a CMOS 175 address. If it is not a used address (no feature), then at 59DE CE feature number is incremented. Then at 59E3, the flag CENUMFND equal one is checked along whether or not all of the digits are set. If so, then whether or not it is CENUMFND is checked at 59EP. If so, then the CERDTABL procedure of Figure 23 is invoked at 59EF. If it is not the number found, then the valid number flag is reset at 59F2; i.e., no number is to be displayed at this time.

Returning to 5979, in converting the feature number to an address, if it is an assigned address, then at 59B1 the address is sent to a register called LOGPTR, i.e. ,the pointer to the log to be accessed in CMOS 175. Then at 59B2 the CCTRSAVE contents are read from working store 172 and a FNDGRP procedure is invoked. FNDGRP is a search procedure using known data processing techniques to convert the LOGPTR to an actual memory address, for example, address modification by substitution via table lookup. Then at 59BE, CMP 170 checks to determine if it is at the end of the table. If so, then 59DE is entered. If not, at 59C0 CMP 170 checks to see if the least significant digit is equal to zero (group number). If it is not zero (still within a group), then at 59C6 the next element of that group in the table is searched for. This is the same table lookup procedure as described for FNDGRP except it is to identify a memory address in CMOS 175 for an element within a group. Then the end of table flag (EOT) is checked at 59D0. If it is not end of table, then the above-mentioned flag CENUMFMD is set to unity at 59D1. That is, the memory address of CMOS 175 corresponding to the KB 57 entry or its incremented entry has been calculated and accessing a CMOS 175 register can ensue.

Returning to 59C0, if the least significant digit (LSD) of the KB 57 entered value is zero, i.e., a group code, then at 59D8, the flag CENUMFLG, which indicates a group code, is set.

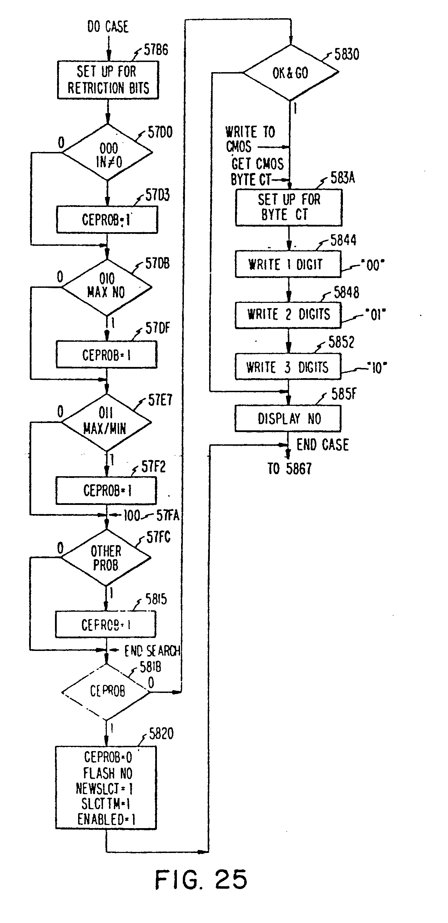

Figure 25 is a procedure for defining the extent of searching in CMOS 175. The extent of searching is determined by a so-called set of restriction bits which are three binary digits and which will become apparent from a review of Figure 25. At 57B6 CMP 170 sets up the procedures for restriction bits, i.e., clears registers and the like. If the restriction bits are all zeros at 57D0, i.e., the input is not zero, then at 57D3 the CE flag 1 is set, i.e., it is a CE function. Restriction bits 010 indicate a maximum number such as sensed at 57DB. Similarly, a maximum or a minimum are indicated by bits 011 at 57E7. Other types of problems, i.e., access to CMOS 175 can be checked at 57FC. The search is ended at 5815. Then whether or not a CE problem has been set up is checked at 581B. If so, the CEPROB flag is reset at 5820 and the number entered is flashed. The new select flag is set to unity, selection is enabled, and the display 64 is enabled. If it is not a CEPROB, then at 5830 whether all authorizations indicate that it is all right to write in CMOS is checked at 5830. If so, then CMOS byte count is obtained and set up at 583A. Then one, two or three digits are written as indicated by 5844, 5848, 5852, i.e., this action is the actual data recording in CMOS 175. Note the binary flags 00, 01 and 10 correspond to the previously described field length indications for CMOS 175. If writing in CMOS 175 is not yet ready, then the number is displayed at 585F.

Figure 26 shows procedure CESETTBL which enables access to CMOS 175 by enabling certain procedures to be set up preparatory for fetching and storing data signals. First at 5A2C the value stored in CPYSLCT is transferred to the backup reigister CCTRSAVE, both registers in working store 172. At 5A30 the number in CPYSLCT is checked to see if it is greater than the upper limit 899. If it is, then a recycling of the scan must be performed as indicated by setting OPTTABLE (operations table) to unity at 5A38. If the number is not greater than 899, then it is checked to see whether or not that number is greater than 849 at 5A3E. If so, USETABLE is set to unity. This is the operations use table flag. Otherwise the flag is set to 00 at 5A4C. From this, it is seen that Figure 26 procedure describes accessing CMOS 175 in accordance with Tables I, II or III, Table I corresponding to 5A4C, Table II to 5A48, and Table III to 5A38.

It is to be appreciated that the above description is on a procedure-by-procedure basis. Because of the speed of CMP 170, each access to CMOS 175 includes several passes through the procedures, the actual execution depending on the flag values stored in working store 172.

**Claims**

1. A document reproduction system including a digital control system (15, 16) having coupled thereto a multi-digit display system (64), an input keyboard (57), a plurality of manually actuable switches (58, 59, 60, 62) for initiating respective operational functions of the reproducing system, a non-volatile digital store (175) and first means (105, 106, 108) coupled to malfunction detectors and operable to record in the store error entries, each representing the number of occurrences of an associated malfunction detected in the reproduction system, characterised by the entries being arranged in groups of related malfunctions, and by second means (125, 153, 192) responsive to the actuation of a first of said switches (62) and a predetermined keyboard entry to perform an error log scanning operation in which actuation of a second of said switches (59) causes scanning of said entries in sequence to search for the first having a non-zero content, detection of such a content causes a number identifying the group in which the entry occurs to be displayed on the display system, subsequent activation of a third of said switches (60) causes a number identifying the entry to be displayed, then actuation of a fourth of said switches (58) causes the content of the entry to be displayed and actuation of the second switch continues the scanning.

2. A system according to Claim 1 further characterised in that said first means includes an encoder (105) responsive to inputs from different malfunction detectors to generate different store addresses, each corresponding to an associated one of the malfunction detectors, and means (108) for incrementing the content of a storage location, addressed by the encoder signals in response to a signal from a malfunction detector, by one.

3. A system according to Claim 1 or Claim 2 further characterised in that said second, third and fourth switches are normally effective to control copy production operations and are coupled to control said scanning operation in response to actuation of the first switch

**Revendications**

1. Système de reproduction de documents comprenant un système numérique de commande (15, 16) auquel est connecté un système d'affichage à plusieurs chiffres (64), un clavier d'entrée (57), plusieurs commutateurs actionnables manuellement (58, 59, 60, 62) pour déclencher les fonctions operationelles du système de reproduction qui leur correspondent respectivement, une mémoire numérique non-volatile (175), et des premiers moyens (105, 106, 108) connectés à des détecteurs de défauts de fonctionnement et permettant d'enregistrer dans la mémoire des inscriptions dont chacune représente le nombre d'apparitions d'un défaut de fonctionnement associé détecté par le système de reproduction, ledit système étant caractérisé en ce que les inscriptions sont groupées par défauts de fonctionnement apparentés, en ce qu'il comporte des seconds moyens (125, 153, 192) permettant, en réponse à l'actionnement d'un premier desdits commutateurs (62) et à une inscription prédéterminée introduite au moyen du clavier, d'effectuer une opération de balayage de liste d'erreurs au cours de laquelle l'actionnement d'un second desdits commutateurs (59) provoque le balayage séquentiel desdites inscriptions de manière à déterminer celle dont le contenu est différent de zéro, la détection d'un tel contenu provoquant l'affichage par le système d'affichage d'un nombre identifiant le groupe dans lequel apparaît l'inscription, en ce que l'actionnement ultérieur d'un troisième desdits commutateurs (60) provoque l'affichage d'un nombre identifiant l'inscription, et en ce que l'actionnement d'un quatrième desdits commutateurs (58) provoque ensuite l'affichage du contenu de l'inscription, l'actionnement du second commutateur permettant au balayage de se poursuivre l'inscription, et en ce que l'actionnement d'un quatrième desdits commutateurs (58) provoque ensuite l'affichage du contenu de l'inscription, l'actionnement du second commutateur permettant au balayage de se poursuivre.

2. Système selon la revendication 1, caractérisé en outre en ce que lesdits premiers moyens comprennent un codeur (105) permettant, en réponse aux entrées reçues de différents détecteurs de défauts de fonctionnement, d'engendrer différentes adresses de mémoire dont chacune correspond à l'un desdits détecteurs qui lui est associé, et des moyens (108) permettant d'inclémenter d'une unité le contenu d'une position de mémoire adressée par les signaux engendrés par le codeur en réponse à un signal émanant d'un détecteur de défauts de fonctionnement.

3. Système selon la revendication 1 ou 2, caractérisé en outre en ce que lesdits second, troisième et quatrième commutateurs permettent normalement de commander les opérations de reproduction et sont connectés de façon à commander ladite opération de balayage en réponse à l'actionnement du premier commutateur.

## Patentansprüche

1. Ein Dokumentations-Reproduktionssystem mit einem digitalen Steuersystem (15, 16), das mit einem Veilfach-Ziffern-Anzeigesystem (64) verbunden ist, mit einen Eingabetastatur (57), mit einer Vielzahl von manuell betätigbaren Schaltern (58, 59, 60, 62) zur Auslösung entsprechender Operationen des Reproduktionssystems, mit einem nicht-flüchtigen digitalen Speicher (175) und mit ersten Mitteln (105, 106, 108), die mit Fehlerdetektoren verbunden sind und zur Aufzeichnung von Fehlereingaben im Speicher dienen, von denen jede für einen zugeordneten Fehler die im Reproduktionssystem festgestellte Fehleranzahl darstellt, dadurch gekennzeichnet, daß die Einträge in Gruppen von zugeordneten Fehlern angeordnet sind, daß zweite Mittel (125, 153, 192) vorgesehen sind, die durch Betätigung eines ersten der besagten Schalter (62) und einer vorgegebenen Tastatureingabe wirksam werden zur Ausführung einer Fehleraufzeichnung-Abtastoperation, in welcher die Betätigung eines zweiten der besagten Schalter (59) die Abtastung der besagten Einträge nacheinander durchführt, um nach dem ersten Eintrag mit einem von Null abweichenden Inhalt zu suchen, daß die Auffindung eines solchen Inhalts die Anzeige eines Zahlenwertes durch das Anzeigesystem bewirkt, der die Gruppe identifiziert, in welcher der ermittelte Eintrag erscheint, daß nach Betätigung eines dritten der besagten Schalter (60) bewirkt die Anzeige eines Zahlenwertes, der den Eintrag identifiziert, wonach die Betätigung eines vierten der besagten Schalter (58) die Anzeige des Eintrags bewirkt und die Betätigung des zweiten Schalters eine Fortsetzung der Abtastung veranlaßt.

2. Ein System nach Anspruch 1, weiter dadurch gekennzeichnet, daß die besagten ersten Mittel einen Codierer (105) enthalten, der auf Eingangssignale von verschiedenen Fehlerdetektoren unterschiedliche Speicheradressen erzeugt, von denen jede einem Fehlerdetektor zugeordnet ist, und daß Mittel (108) vorgesehen sind zur Inkrementierung des Inhalts einer Speicherstelle um Eins, die durch ein Ausgangssignal des Decodierers adressiert wird, nachdem diesem ein Signal von einem Fehlerdetektor zugeführt worden ist.

3. Ein System nach Anspruch 1 oder 2, weiter gekennzeichnet dadurch, daß die besagten zweiten, dritten und vierten Schalter normalerweise wirksam sind zur Steuerung von Kopie-Produktionsoperationen und angeordnet sind zur Steuerung der besagten Abtastoperation nach Betätigung des ersten Schalters.

FIG. 3

FIG. 1

FIG.2

FIG. 4

FIG. 5

FIG. 6

FIG. 7

FIG. 8

FIG. 9

FIG. 10

FIG. II

FIG. 12

FIG.13

FIG.14

FIG.15

FIG.16

FIG. 17

FIG. 19

FIG. 18

14

FIG. 20

FIG. 21

0 0 0 2 5 6 7

FIG. 22

FIG. 23

17

FIG. 24

FIG. 26

FIG. 25